# EUROPEAN PATENT SPECIFICATION

(11) **EP 4 049 329 B1**
(45) Date of publication and mention of the grant of the patent: **02.08.2023**
(21) Application number: 20793620.4
(22) Date of filing: 15.10.2020
(51) Int. Cl.: H01M 8/04014, F23C 7/00, F23D 14/02, F23G 7/06, H01M 8/04746

(54) **A FUEL CELL SYSTEM AND TAIL GAS BURNER ASSEMBLY AND METHOD**
BRENNSTOFFZELLENSYSTEM UND ABGASBRENNERANORDNUNG UND VERFAHREN
SYSTÈME DE PILE À COMBUSTIBLE ET ENSEMBLE BRÛLEUR À GAZ RÉSIDUAIRE ET PROCÉDÉ

(30) Priority: 22.10.2019 GB 201915281; 22.10.2019 US 201916660078
(43) Date of publication of application: 31.08.2022
(73) Proprietor: Ceres Intellectual Property Company Limited, West Sussex RH13 5PX (GB)
(72) Inventor: COTTEREAU, Isaac, Horsham West Sussex RH13 5PX (GB); MCLORN, Michael, Horsham West Sussex RH13 5PX (GB); POSTLETHWAITE, Oliver, Horsham West Sussex RH13 5PX (GB); DOZIO, Simone, Horsham West Sussex RH13 5PX (GB); BARNARD, Paul, Horsham West Sussex RH13 5PX (GB); SCHMIDT, Martin, Horsham West Sussex RH13 5PX (GB)
(74) Representative: Carpmael, Robert Maurice Charles
(86) International application number: PCT/EP2020/079131
(87) International publication number: WO 2021/078632

(56) References cited:
- WO-A1-2009/061299
- US-A1- 2017 346 107

## Description

### FIELD OF THE INVENTION

The present invention is concerned with fuel cell systems with tail gas burners, particularly, burners and methods of operating the same with multiple fuel feeds.

### BACKGROUND OF THE INVENTION

Teachings of fuel cells, fuel cell stacks, fuel cell stack assemblies, and heat exchanger systems, arrangements and methods are well known to one of ordinary skill in the art, and in particular include WO02/35628, WO03/07582, WO2004/089848, WO2005/078843, WO2006/079800, WO2006/106334, WO2007/085863, WO2007/110587, WO2008/001119, WO2008/003976, WO2008/015461, WO2008/053213, WO2008/104760, WO2008/132493, WO2009/090419, WO2010/020797, and WO2010/061190.

Unless the context dictates otherwise, the term "fluid" incorporates both liquids and gases.

Legislation and the general trend of improved environmental responsibility encourages an interest in reducing the emissions produced by the burning or combustion of fuel in all operations. In fuel cell operation in particular, there is legislation which sets maximum limits for emission levels, such as European standard EN 50465:2008 which applies to a fuel cell gas heating appliance when in domestic use. Of particular importance in controlling emissions is the reduction of carbon monoxide (CO) and nitrous oxides (NOₓ) emissions.

Burner design is of great importance when it comes to controlling combustion emissions. Factors such as the air flow, the mixing of reactants and the position of the flame must all be considered along with the chemical composition of the fuel to be burned. A change in the composition of a fuel combusted in the same burner can result in very different emissions. Therefore, it is often necessary to design a burner for a specific fuel in order to adhere to the required emission limits. Despite this, there are situations where a burner must be fuelled by various fuels, and where combustion stability and emission control is important in each of these modes.

Burners are often used in fuel cell systems to provide thermal energy to raise the temperature of the fuel cell system and its related system parts to operating temperature. A fuel cell system typically includes at least one fuel cell stack.

Fuel cell systems need to be designed with longevity in mind, that is to say, so as to operate over many years, often running continuously. This makes the design of a burner for use in such a system particularly critical since burners, in some modes of operation, can have the tendency for coke to form within the fuel supply tubes of the burner. In particular, coking can occur in a supply tube that delivers fuel with a high calorific value, such as natural gas.

Where reference is made herein to a fuel cell or fuel cell system then more preferably, the reference is to a solid oxide fuel cell (SOFC) or SOFC system, more preferably to an intermediate temperature solid oxide fuel cell (IT-SOFC) or IT-SOFC system. A fuel cell system will comprise an at least one fuel cell stack, each fuel cell stack comprising at least one fuel cell. More preferably, the fuel cell has, or fuel cells of the fuel cell stack have, an operational temperature range of 450-650 degC, more preferably 500-610 degC.

When utilizing solid oxide fuel cells, it is preferable that the burner is fuelled by both a low calorific value (LCV) fuel and a high calorific value (HCV) fuel. It should be noted that these terms are distinct from e.g. "lower calorific value" (also referred to as "LCV") and "higher calorific value" (also referred to as "HCV") - all fuels have both a lower calorific value and a higher calorific value. Examples of low calorific value (LCV) fuels are those with a high fraction of H₂, CO, and optionally with a low fraction of CH₄. The Wobbe index for a LCV fuel is typically between 18 and 35 MJ/m³. Examples of high calorific value (HCV) fuels are those comprising of methane, ethane or propane or any combination therein, the Wobbe index for a HCV fuel is typically between 36 and 85 MJ/m³. Reference to natural gas or a fuel gas is referring to the high calorific value fuel and generally means that no process has taken place within the fuel cell stack to reduce the calorific value (i.e. to reduce the energy content of the gas). Reference to an anode off-gas is to the low calorific value fuel and is to mean a fuel (i.e. the LCV fuel) that has been processed in the fuel cell system, such as passing through a fuel cell stack and output from the anode as off-gas.

The fuel cell stack uses a hydrogen-rich HCV fuel for the electrochemical reaction. As a result of the electrochemical reaction, the fuel gas changes composition with some of the reactive elements being oxidised, such as hydrogen becoming water vapour and carbon monoxide becoming carbon dioxide. As a result, the off-gases from this process are an LCV fuel. It is therefore clear that a HCV fuel is distinct from an LCV fuel.

The LCV fuel formed from the electrochemical reaction can then be combusted in a burner. However, the combustion of a HCV fuel is typically required to initially heat the fuel cell system (e.g. at start-up) until the fuel cell reaches operating temperature. Thus, at start-up it is necessary to combust an HCV fuel. During steady-state operation of the fuel cell it is necessary to combust a predominantly LCV fuel. During the transition between fuel cell operating point states (i.e. when the electrical power output of the fuel cell is changed), the composition of the fuel to be combusted changes accordingly, and similarly changes during the transition from steady-state to shut-down. To maintain low emissions with the combustion of each of these fuels, different configurations of burner are required: an HCV fuel burner favours a great degree of mixing with an oxidant prior to combustion; whereas an LCV fuel burner favours a low amount of mixing with an oxidant prior to combustion. Furthermore, a greater airflow is preferred for an HCV fuel compared to an LCV fuel. However, due to requirements elsewhere in the system, such as the oxidant flow being used to control the temperature of the fuel cell stack, it is rarely possible to control airflow to the burner solely for combustion control purposes. It is therefore clear that in the situation described, utilizing a burner designed for one of the fuels or for a specific airflow would result in unfavourable combustion for the other fuel.

It is therefore desirable to produce a fuel cell system and burner which is able to combust both LCV and HCV fuels either at the same time, or individually, without separating the combustion or utilizing complex systems, whilst maintaining low emissions, reducing the likelihood of coking within the burner and coping with the varying airflows and, in particular, a wide ranging air to fuel ratio, lambda.

Prior art devices can also suffer from a lack of flame stability over a wide range of operating conditions, including different lambdas. In addition, it is also desirable to achieve a compact flame in order to reduce product size.

The present invention seeks to improve upon prior art burners. In particular, it seeks to address, overcome or mitigate at least one of the prior art issues.

### SUMMARY OF THE INVENTION

According to the present invention there is provided a fuel cell system comprising:
a burner assembly comprising:
(i) a hollow longitudinally elongate body extending along a central axis and having a first end and a second end,
(ii) a burner wall located between said first end and said second end, and defining a first volume from said first end to said burner wall, and a second volume from said burner wall to said second end,
(iii) an oxidant inlet into said first volume, the oxidant inlet for providing an oxidant flow therethrough,
(iv) at least one hollow elongate burner abutting said burner wall or extending through an opening in said burner wall from said first volume to said second volume, and comprising:
   (a) a burner plate or mixer having a first side opening into said first volume, and a second side opening into said second volume,
   (b) a first fuel inlet into said first volume for feeding a first fuel from a first fuel passageway to said first volume, and
   (c) a second fuel inlet into said second volume for feeding a second fuel from a second fuel passageway to said second volume;
wherein the system further comprises at least one connection for selectively connecting the first fuel passageway to the second fuel passageway for delivery of a mixture of the first fuel and second fuel to the second fuel inlet.

Reference herein to method steps or features is also reference to the system of the present invention adapted or configured to perform such method steps.

The first end may also be referred to as the upstream end, and the second end may be referred to as the downstream end. The terms "upstream" and "downstream" are intended to reflect the relative positions of the components referenced. In particular, the use of "upstream" and "downstream" may reflect the relative positions of components in a fluid flow path or in a process. The phrase "upstream of 'feature X'" (in the context of a feature within the body) means located toward the first end from 'feature X', i.e. between the first end and 'feature X'; "downstream of 'feature X'" (in the context of a feature within the body) means located toward the second end from 'feature X', i.e. between feature X and the second end. Similarly, the first side may be referred to as an upstream side, and the second side may be referred to as a downstream side. The first fuel inlet can also be referred to as an HCV fuel inlet, and the second fuel inlet can also be referred to as an LCV fuel inlet. Likewise, the first fuel can also be referred to as a HCV fuel, a fuel gas or natural gas, and the second fuel can also be referred to as an LCV fuel or an anode off-gas.

The use of the at least one connection (e.g. a connection between the first fuel passageway and the second fuel passageway or a connection between a first fuel supply sub-system and a second fuel supply sub-system to connect the first fuel supply and the second fuel supply) allows the redirecting of the first fuel, that is normally introduced prior to the burner plate or mixer, to be introduced after the burner plate or mixer. Such a redirection of flow via the at least one connection, for example, a bypass line (connecting the two respective supply lines), is counter-intuitive because the combustion conditions for the HCV downstream of the burner plate or mixer is less than ideal. However, such a system design enables a broader range of operation of the system, for example, allowing it to still use a HCV fuel in a desired proportion (e.g. a small proportion of say no more than 30%, or no more than 20% of the total first and second fuel intake) during operating conditions (e.g. high system operating temperature) where the tendency for coking build up in the fuel lines, particularly in the first fuel inlet, is much higher.

In some burners, the flexibility to be able to redirect the first fuel may assist with combustion characteristics, for example, it may be used for improving flame stability, for example, if used temporarily during a transition between modes.

Preferably, the burner may be integrally formed within the burner assembly or may be a replaceable separate burner unit mounted in the burner assembly.

Preferably, the burner comprises at least one hollow longitudinally elongate burner unit having a burner unit first end extending outwardly of an opening in said body from said first volume, the burner unit extending through an opening in said burner wall from said first volume to said second volume to a burner unit second end. When the system comprises a mixer, for example, an axial or swirl mixer, this may be located between said burner unit first end and said burner unit second end. When the system comprises a burner plate, this may be located at or near said burner unit second end.

The reference to a 'burner unit' herein, is reference to a replaceable burner unit or a integral burner as appropriate.

Preferably, the hollow longitudinally elongate body defines an inner cavity. More preferably the body is a walled shape that defines an inner volume. Examples of shapes for the hollow longitudinally elongate body include cylinders and tubes, and shapes with a polygonal cross-section. Examples of polygonal cross-sections include quadrilateral (such as rectangular), pentagonal, hexagonal, heptagonal and octagonal cross-sections. The body may extend both along and about said central axis.

As noted above, the body extends along a central axis. In certain embodiments, the central axis may be other than a straight axis. For example, the axis may be curved, or it may be stepped.

As can be seen from the above definition, a fluid flow path is defined from said oxidant inlet to said first volume to said second volume.

The first volume may be considered to be defined between the first end, the burner wall and the body. Similarly, the second volume may be considered to be defined between the burner wall, the second end and the body.

Preferably, the body comprises a body inner surface extending from said burner wall to said second end. Preferably, said second volume is defined between said burner wall, said body inner surface, and said second end.

The second volume can also be referred to as a flame tube, and the two terms are used interchangeably herein.

Preferably, an end wall is located at said first end. This allows the optional routing of components through the end wall. However, the inlets can be positioned at different locations to enter the first volume.

As stated above, in some arrangements, the first end of the at least one burner unit extends outwardly of an opening in the body from the first volume. Thus, the first end of the at least one burner unit does not have to extend from the end wall at the body first end. For example, the first end of the at least one burner unit may extend from a side wall of the body. Where the burner assembly comprises multiple burner units then in some embodiments the portion extending outwardly of an opening in the body from the first volume may be a shared or common part of multiple burner units.

Preferably, the system comprises a three-way valve for selective connection of the first fuel passageway to the second fuel passageway.

The valve advantageously allows the directing of the first fuel either to the first fuel inlet or the second fuel inlet. The valve allows the closing of a flow to the first or second fuel inlet as required. More preferably, the valve may be (e.g. a variable valve and be) selectively operated such that the flow is directed to both the first fuel inlet and the second fuel inlet thereby a proportion of the first fuel is supplied to the first fuel inlet and the remainder of the first fuel is supplied to the second fuel inlet. This can allow the varying of combustion characteristics where the burner assembly is transitioning through operating modes to reduce undesired outputs, such as coke build up.

In one arrangement, a first fuel supply sub-system (first fuel passageway) and a second fuel supply sub-system (second fuel passageway) respectively supply the fuels to the respective inlets of the burner and a bypass line extends between the two subsystems. It may extend from a three-way valve provided in the first fuel supply sub-system to a junction with the second fuel supply sub-system, which junction may be an open connection.

Alternatively, the first fuel supply sub-system may comprise a junction (open connection) where it divides into downstream branches with one branch leading to the first fuel supply inlet to the burner and the other branch leading to the second fuel supply sub-system, with a two-way valve, for example, an (e.g. actuatable) on/off or variable valve provided in either or both branches. Upstream of such a junction, a further variable or on/off valve may also optionally be provided so that the overall amount of HCV fuel may be selectively metered upstream of the at least one connection.

Thus, either a three-way valve may be used or, in some embodiments a three-way pipe branch may be used where valves, e.g. two-way valves, may also be used with the same effect of directing the first fuel flow.

Preferably, when comprising the mixer, the mixer is an axial swirl mixer, comprising a plurality of vanes having a first side opening into said first volume, and a second side opening into said second volume. An axial swirl mixing provides swirl to a flow (e.g. oxidant or a first fuel and oxidant mix) that passes through the swirl mixer to the second volume. This can vary combustion characteristics.

Preferably, when comprising the burner plate, said burner plate comprising a plurality of passageways extending between said first volume and said second volume. The multiple small passageways produce multiple small flames thereby confining combustion to a small region close to the burner plate. The plate can be considered a disc that separates the first volume and second volume at or near the burner wall.

The swirl mixer and burner plate are interchangeable alternatives within a burner assembly. Therefore, unless specifically limited to the multiple passageways, or the vanes, for instance, the other features of the burner assembly are compatible with both. Therefore, reference to one throughout the document can be reference to the other.

Preferably the second fuel inlet is more proximal to said burner unit second end than the first fuel inlet. The positioning of the second fuel inlet in the second volume results in a reduction in the mixing with air (i.e. oxidant) as fuel that exits from the second fuel inlet does not pass through the burner plate or mixer. By positioning the second fuel inlet proximal to the burner unit second end, the resultant mixing with the combusted turbulent air / fuel from the burner plate or mixer and/or position of the flame formed from the second fuel inlet in the second volume improves combustion characteristics.

Preferably, the system further comprises a fuel cell stack, and wherein the first fuel comprises a fuel gas that has not passed through the fuel cell stack. Typically, the first fuel comprises a high calorific value (HCV) fuel. When the first fuel has a higher calorific value than the second fuel, the selective supply of the first fuel into the second fuel makes the mixture have a higher calorific value than the second fuel, the first fuel thus being a top-up gas. In certain modes, the higher calorific gas, i.e. HCV fuel, is more likely to result in coke formation in the HCV supply tube when fed to the first fuel inlet (prior to the burner plate or mixer). In those modes, by allowing the mixing of the HCV fuel and LCV fuel and then supply to the second fuel inlet, it is possible to still use HCV in the fuel cell system whilst minimising the risk of coke formation over the fuel cell system lifetime.

Preferably, the second fuel is an anode off-gas from a fuel cell stack of the fuel cell system. This anode off-gas has a low calorific fuel as the (HCV) fuel has passed through the fuel cell stack and may have passed through a reformer, and undergone a chemical reaction. This anode off-gas has a higher humidity than the HCV fuel as a result of the chemical reaction within the fuel cell stack. This humidity can assist with lowering the likelihood of coke formation of the HCV fuel when the fuels are mixed and fed to the second fuel inlet.

Preferably, the fuel cell system comprises an off-gas pipe system connecting an outlet of an anode of a fuel cell stack to said second fuel inlet for the supply of an anode off-gas from the anode side of a fuel gas cell to said second fuel inlet. The second fuel passageway forms part of the off-gas pipe system. The off-gas pipe system (or second fuel supply sub-system) is a flow connection to place an outlet of the anode side of the fuel cell stack in fluid communication with the second fuel inlet, therefore the LCV fuel passes through the off-gas pipe system. The off-gas pipe system does not need to connect directly to the burner assembly. The anode off-gas pipe system may pass through various components such as heat exchanger prior to reaching the burner assembly.

Preferably, the fuel cell system comprises a first gas pipe system (or first fuel supply sub-system) connecting the first fuel gas source to said first fuel inlet for the supply of the first fuel gas to said first fuel inlet. The first fuel passageway forms part of the first gas pipe system. The first gas pipe system provides a flow connection to place a fuel source in fluid communication with the burner assembly. Therefore, HCV fuel is supplied to the burner assembly through the pipe system. The HCV fuel may be supplied to various other components in the fuel cell system, such as a reformer and the fuel cell stack. The first gas pipe system is also referred to as a fuel gas pipe system.

Whilst a pipe system is described, the pipe can take any form suitable to allow a fluid, i.e. a fuel, off-gas or oxidant, to be in fluid communication between two points.

Preferably, the first gas is a fuel gas that is mains supplied gas, natural gas, start-up fuel or top-up fuel. These fuels all have a high calorific value and as such have the characteristics associated with them above, e.g. they advantageously can be used for high temperature combustion producing heat for the fuel cell stack and system. However, they can also result in coke formation in certain situations which can cause blockages of the pipes (in contrast to anode-off gases which leave the stack with a steam content mitigating against coking).

Preferably, the connection, for example, bypass line, directly connects said first fuel passageway to said second fuel passageway for selectively diverting the supply of the first fuel from said first fuel inlet to said second fuel inlet. The bypass line is thus connected between the off-gas pipe system and the first gas pipe system. The bypass line can be a branched line or can be connected by a valve, such as a three-way valve. The direct connection of the bypass line ensures rapid transition between modes of operation when the bypass line is operated, e.g. via a valve.

In use, the connection between the passageways may be selectively used i.e. the supply of first fuel through the connection or bypass line may be operable or controllable, for example, by means of operating valves upstream of, or within, the bypass line.

Preferably, the plurality of vanes have an inner diameter and an outer diameter. Preferably, said swirl mixer is located at a point between said first fuel inlet and said second fuel inlet which intersects with a plane perpendicular to said central axis, and which plane intersects with a point along said central axis equal to or within one inner diameter of said plurality of vanes from a point which is the point along said central axis furthest from said first end where a plane perpendicular to said central axis at said point intersects with said burner wall.

In certain embodiments, the vanes are formed as part of the burner wall, such that the burner wall is manufactured with the vanes or swirl mixer, or the burner wall is cut or machined to form vanes from the burner wall without the addition of a discrete burner unit.

Preferably, said first fuel inlet is positioned radially inward of said outer diameter of said plurality of vanes. The positioning of the first fuel inlet radially inward of the vanes assists with fuel provided through the first fuel inlet being drawn through the vanes.

Since the at least one burner unit extends through an opening in the burner wall, each burner unit first end may be considered to define part of the perimeter or the first volume. Similarly, each burner unit second end may be considered to define part of the perimeter of the second volume. Thus, when the swirl mixer is positioned more toward the first end within the first volume, the first volume is reduced, and when the swirl mixer second side is positioned more toward the second end within the second volume, the second volume is reduced.

Preferably, an at least one burner unit comprises a burner unit outer body which more preferably defines a burner unit inner volume. Thus, the inner volume is contained within (i.e. is a part of) the first volume. Preferably, the burner unit outer body defines at least one opening (an at least one air inlet opening). Preferably, a fluid flow path is defined from said oxidant inlet to said first volume to said burner unit inner volume to said second volume (i.e. from said oxidant inlet to said first volume to said second volume via said inner volume portion of said first volume). Preferably, the first fuel inlet is located within the inner volume.

Unless the context dictates otherwise, reference herein to "an at least one burner unit" and to "at least one burner unit" is preferably to each at least one burner unit and to each burner unit as appropriate.

Preferably, at least one burner unit comprises an outer collar extending through said opening in said burner wall from said first volume toward said second volume, said outer collar having an outer diameter, an inner diameter, a first end and a second end. Preferably, said outer diameter is equal to the diameter of the opening in said burner wall.

Preferably, at least one burner unit comprises an inner collar extending through said opening in said burner wall from said first volume toward said second volume, said inner collar having an outer diameter, an inner diameter, a first end and a second end.

Preferably, the outer collar and inner collar first ends are the ends of the outer and inner collars closest to the swirl burner assembly first end. Similarly, the outer collar and inner collar second ends are preferably the ends of the outer and inner collars closest to the swirl burner assembly second end.

More preferably, said outer collar second end intersects with a plane perpendicular to the central axis and which plane extends between the swirl mixer and the swirl burner assembly second end, and which plane intersects with a point along said central axis equal to or between one inner diameter of the plurality of vanes and half the inner diameter of the plurality of vanes downstream from the geometric mid-point.

More preferably, said outer collar first end intersects with a plane perpendicular to the central axis and which plane extends between the swirl mixer and the swirl burner assembly first end, and which plane intersects with a point at a position equal to or within two outer diameters of the plurality of vanes upstream of the said outer collar second end.

In certain embodiments, part or all of the outer collar may be formed by the burner unit outer body.

More preferably, said inner collar second end intersects with a plane perpendicular to the central axis, and which plane intersects with a point at a position along said central axis and which plane extends between the swirl mixer and the swirl burner assembly second end, and which plane intersects with a point along said central axis equal to or less than half of the inner diameter of the plurality of vanes downstream from the geometric mid-point.

More preferably, said inner collar first end (the part of the inner collar first end closest to the swirl burner assembly first end) is located downstream of the first fuel inlet and upstream of the inner collar second end.

Preferably, the outer diameter of said inner collar is smaller than the inner diameter of said outer collar. More preferably, the inner collar is positioned radially internal to (i.e. radially inwards of) said outer collar.

In certain embodiments, the outer collar is formed as part of the burner wall, in that it is integral to the wall. In such embodiments, the outer collar can still extend toward the body first and/or second end. For instance, the outer collar may be extruded, shaped, pressed or otherwise formed from the burner wall. Similarly, the inner collar may be formed as part of the burner wall.

Preferably, the plurality of vanes are positioned within said outer collar. More preferably, the plurality of vanes extend radially between said outer collar and said inner collar. Preferably, the outer collar inner diameter is equal to the outer diameter of the plurality of vanes and the inner collar outer diameter is equal to the inner diameter of the plurality of vanes.

In some embodiments the plurality of vanes may extend from a single one of said inner collar or said outer collar, such that they are supported by a single collar, in such an embodiment the outer diameter of the plurality of vanes may be smaller than the inner diameter of the outer collar, or the inner diameter of the plurality of vanes may be greater than the outer diameter of the inner collar.

To one of ordinary skill in the art, it will be obvious to manufacture the vanes as part of the inner collar, or as part of the outer collar, or as part of the inner and outer collars, or as part of the outer collar where the outer collar is part of the burner unit, for example as part of a burner unit outer body.

The collars can affect burner characteristics, since they may extend into the second volume further than the plurality of vanes.

Where there is more than one burner unit, preferably each burner unit has an inner collar and an outer collar which extends through the opening in the burner wall for that burner unit.

Preferably, the first and second fuel inlets are located radially inward of the inner diameter of the plurality of vanes.

Preferably, the first and second fuel inlets are aligned along an axis generally parallel to the central axis or are independently aligned along axes generally parallel to the central axis.

Preferably, the outer diameter of the plurality of vanes is between two and four times, more preferably about three times, greater than the inner diameter of the plurality of vanes.

Preferably each at least one burner unit: (A) defines a first point which is the point along said central axis closest to said first end where a plane perpendicular to said central axis at said point intersects said plurality of vanes of said burner unit swirl mixer; (B) defines a second point which is the point along said central axis furthest from said first end where a plane perpendicular to said central axis at said point intersects said plurality of vanes of said burner unit swirl mixer; and (C) defines a geometric mid-point along said central axis equidistant from said first point and said second point.

Preferably each first fuel inlet is located at a point between said oxidant inlet and said swirl mixer which intersects with a plane perpendicular to said central axis, and which plane intersects with a point along said central axis between 1 and 2 equivalent circular diameters of said first fuel inlet flow area from said first point.

Preferably each second fuel inlet is located at a point between said first fuel inlet and said second end which intersects with a plane perpendicular to said central axis, and which plane intersects with a point along said central axis equal to or less than said inner diameter of said plurality of vanes from said geometric mid-point.

The definition of such locations allows the defining of the location of the first and second fuel inlets for the improved burner performance described.

Preferably, said first point is the point along said central axis closest to said first end where a plane perpendicular to said central axis at said point intersects a section of said plurality of vanes (i.e. intersects said plurality of vanes at a point) which is adapted to induce angular momentum in a fluid flowing along said plurality of vanes. Thus, in a burner unit with a plurality of vanes having a section which does not induce angular momentum in a fluid flowing over it (e.g. the vanes having a straight section which does not move radially about an axis, particularly an axis generally parallel to said central axis) and a curved section, the first point is considered to be at the beginning of the curved section.

Within the definition of the present invention, said HCV inlet may be toward the second volume or said LCV inlet may be positioned toward the first volume. Where such repositioning may only be to an extent that the combustion will not be adversely affected, i.e. the swirl burner assembly is no longer effective for its function.

The second volume defined by the burner wall and the second end may be referred to as a flame tube. Preferably, the flame tube is generally cylindrical and has an inner diameter and an outer diameter and is arranged about the central axis. More preferably, the flame tube inner diameter is between 2 and 3 times the outside diameter of the plurality of vanes. More preferably still, the flame tube inner diameter is 2.5 times the outside diameter of the plurality of vanes.

Preferably, at least one of the first fuel inlet and the second fuel inlet is a nozzle. Each at least one nozzle is defined by at least one hole in said fuel inlet wherein the at least one holes may be any shape. The sum of areas of the at least one hole has an equivalent circular diameter to that of a single circular hole. The sum of areas of the at least one hole can also be referred to as a flow area, e.g. a first fuel inlet flow area or second fuel inlet flow area, or a flow area of the first or second fuel inlet.

Such an inlet can be an orifice in said first or said second fuel pipe. Said inlet need not be positioned at said second end of said first or said second pipe, but can be positioned along said pipe. Where said first or second fuel inlet comprises a plurality of openings, the location of the fuel inlet is preferably defined as being, at mean of the flow area weighted average along the central axis.

Preferably, the burner assembly comprises an igniter. Preferably, the igniter is located in the second volume. More preferably, the igniter extends outwardly from the body from the second volume. More preferably an ignition end of the igniter is positioned within the second volume. In certain embodiments, the igniter is located beyond the body second end. In certain embodiments, the igniter extends through the burner wall or through a body second end wall.

Unless the context dictates otherwise, reference herein to an opening is to a hole, channel, opening or passage in a component, and such terms are interchangeable. Each opening may have a shape independently selected from the group consisting of a hole, a channel, and a slot. Each opening may have a cross-sectional shape selected from the group consisting of circle, oval, ellipse, rectangle, reniform (i.e. kidney shaped), and penannular (i.e. almost annular).

Preferably, the burner assembly is a tail-gas burner, where a tail-gas burner is a burner suitable for burning anode and cathode off-gases from a fuel cell stack.

The swirl burner assembly is integral with a fuel cell assembly or system, preferably with a solid oxide fuel cell system, more preferably still with an intermediate temperature solid oxide fuel cell system.

Preferably, the oxidant inlet is in fluid flow communication with an oxidant source. More preferably, the oxidant inlet is in fluid flow communication with at least one fuel cell stack cathode off-gas outlet. Preferably the at least one burner unit is in fluid flow communication with at least one fuel cell stack anode off-gas outlet. More preferably the first fuel inlet of at least one burner unit is in fluid flow communication with at least one fuel source for a fuel cell system. Preferably the second fuel inlet of at least one burner unit is in fluid flow communication with at least one fuel cell stack anode off-gas outlet.

Preferably, the fuel cell system is a solid oxide fuel cell (SOFC) system. More preferably the fuel cell system is an intermediate temperature sold oxide fuel cell (IT-SOFC) system.

The burner assembly will be formed from material known in the art, e.g. metal alloys for pipes and walls and glass for the tubes. Due to the high temperatures, the materials must have high temperature resistance.

Also provided according to the present invention is a method of operating a fuel cell system according to the appended claims 1-9 the method comprising the steps of:
(i) directing an oxidant to said oxidant inlet;
(ii) selectively directing the first fuel to said first fuel inlet and selectively directing the second fuel to said second fuel inlet; and
(iii) combusting the selectively directed fuel or fuels in said second volume after exiting one of:
   a. the burner plate or mixer;
   b. the second fuel inlet; or
   c. the burner plate or mixer and the second fuel inlet.

Preferably, when the first fuel (HCV fuel) is supplied to said first fuel inlet (HCV fuel inlet), said oxidant and said HCV fuel flow converge in said first volume between the first fuel inlet and the swirl burner, and when the second fuel (LCV fuel) is supplied to said second fuel inlet (LCV fuel inlet), said oxidant and said LCV fuel flow converge in the second volume between the swirl burner and the second end.

Preferably, the connection, for example, the bypass line is used for connecting the first fuel passageway to the second fuel passageway for delivering a mixture of the two fuels to the second fuel inlet, whereby the mixture of the two fuels is combusted in the said second volume after exiting the second fuel inlet.

As detailed above, preferably, the HCV fuel is a fuel that comprises of methane, ethane or propane or any combination therein. More preferably, the HCV fuel is considered to be fuels with a Wobbe index between 36 and 85 MJ/m³. A typical HCV fuel is natural gas - the Wobbe index for natural gas is 48 to 54 MJ/m³.

Preferably the LCV fuel is a fuel which has a high fraction of H₂, CO or CO₂. More preferably the Wobbe index for a LCV fuel is typically between 18 and 35 MJ/m³, more preferably 22 and 26.53 MJ/m³.

Preferably, the fuel cell system is selectively operable in a first mode, a second mode, a third mode, and an optional fourth mode, each mode characterised as follows:
(i) the first mode has the first fuel supplied to said first fuel inlet via the first fuel passageway, said oxidant and said first fuel thus converging and mixing in said first volume between said first fuel inlet and said burner plate or mixer, and wherein the second fuel is not supplied to the second fuel inlet;
(ii) the second mode has said first fuel supplied to said first fuel inlet via the first fuel passageway, said oxidant and said first fuel thus converging and mixing in said first volume between said first fuel inlet and said burner plate or mixer,
   and said second fuel is supplied to said second fuel inlet, said oxidant and said second fuel thus converging and mixing in said second volume;
(iii) the third mode has said first fuel supplied to said second fuel inlet via said at least one connection, and said second fuel is also supplied to said second fuel inlet, said first fuel and said second fuel thus mixing for exiting the second fuel inlet as a mixture of the two fuels,
   wherein said oxidant and said mixture then converge and mix in said second volume for combustion;
(iv) the optional fourth mode has said second fuel supplied to said second fuel inlet, said oxidant and said second fuel converging and mixing in said second volume for combustion, and wherein the first fuel is not supplied to either the first fuel inlet or the second fuel inlet.

The modes can refer to different operating modes such as start-up, warm-up, steady state and shut down. Within these modes, temperature levels may result in different requirements, such as the use of the bypass line to prevent coking. Therefore, the fuel cell system can alternate between the use of the bypass line in different modes as required by the fuel cell system. This provides the advantages of the swirl burner assembly in terms of improved combustion performance but also improves system longevity due to the reduced risk of coke formation.

The fourth mode is the steady state mode and ideally that mode is used whereby no fuel gas is consumed i.e. the first fuel is not supplied to either the first fuel inlet or the second fuel inlet. However, there may be some fuel cell systems where it is desirable for a trickle feed of fuel gas to always be used.

Preferably, the system further has a selectable fifth mode in which said first fuel and said second fuel are both supplied to said second fuel inlet, said first and second fuels thus converging and mixing, the mixture then converging and mixing with said oxidant in said second volume for combustion, and wherein the first fuel is also supplied to the first fuel inlet for mixing with the oxidant also in the first volume. This allows the bypass line to provide a variable amount of first fuel to the second fuel inlet (and thus to the first fuel inlet),thereby allowing modes where the first fuel transitions, such as when changing operation modes. The variable flow can be controlled by a variable valve, for instance.

Preferably, the ratio of the mixture of the first and second fuels is variable and controlled by a processor. This allows either preset levels where the flow is predecided, or readings, such as from sensors, can dictate the flow required for required outputs.

Preferably, the ratio of the flow rates of the first fuel to the first fuel inlet and the second fuel inlet is variable and controlled by a processor. This allows the fuel and thus combustion characteristics to be varied to allow for desired outputs.

More preferably, the two ratios may be controlled by a common processor. Likewise the flow rates of all the fuels and oxidant can be controlled by a processor - usually a common processor.

Preferably, the oxidant is air or cathode off-gas from an operating fuel cell (such oxidant then being partially oxygen depleted as compared to air). More preferably, said oxidant is cathode off-gas from an operating solid oxide fuel cell, more preferably an operating intermediate temperature solid oxide fuel cell.

LCV fuel can be formed by the reforming of hydrocarbon fuels, such as an HCV fuel, and the reforming process can include treatment with an oxidant such as air or steam. The LCV may undergo electrochemical reaction in the fuel cell before entering the swirl burner assembly. SOFC fuel cell stack anode off-gases can be considered to be an LCV fuel.

Preferably, reformation of hydrocarbon fuels occurs in a fuel cell system. More preferably the swirl burner assembly is integral with a fuel cell system and burns the anode off gases produced by the fuel cell system.

Preferably, the HCV fuel and/or LCV fuel is ignited or combusted in the second volume by an igniter. More preferably the ignition occurs downstream of the plurality of vanes. Preferably, the step of combusting said fuel in said second volume comprises igniting and combusting said fuel in said second volume.

Preferably, at least one of the first volume and the second volume is a sealed or enclosed volume. More preferably, the burner unit forms a seal when it extends outward from an opening in the said body.

Preferably, the combusted gases flow or are exhausted from the second volume through the second end (i.e. the downstream end) of the body.

The fact that the burner wall separates the first volume from the second volume allows combustion of the fuel to occur and to be constrained to the second volume. This allows the control of mixing of the different fuels in specific parts of the swirl burner assembly prior to combustion. This allows for different amounts of mixing and different intensities of mixing in particular because all oxidant and HCV fuel when supplied to the first fuel inlet must pass through the plurality of vanes to reach the flame tube.

The flow through the plurality of vanes causes further mixing of flows prior to the flame tube where combustion is confined.

Combustion of the mix of oxidant and fuel occurs in the second volume, and the products from this combustion are exhausted from the burner assembly. Preferably, the heat produced from this process is used to heat the fuel cell stack and fuel cell system, Preferably, the flow of the oxidant and at least one HCV fuel and LCV fuel are such that the oxidant to fuel ratio (lambda) of the gas flow to the swirl burner assembly is between 1 and 20 lambda, more preferably between 1 and 18 lambda, more preferably between 1 and 10 lambda or between 2 and 18 lambda. More preferably, when the swirl burner has a flow of oxidant and HCV fuel (with no LCV fuel) the swirl burner assembly operates with an oxidant to fuel ratio of less than 5 lambda.

The relevant measurement of lambda is that at the burner inlets, i.e. the oxidant, HCV and LCV inlets.

As the burner assembly is integral with a fuel cell system, it is advantageous for the burner assembly to be able to operate over a large lambda range since the oxidant flow, and, to an extent, the LCV flow to the burner assembly is dictated by the fuel cell stack and the electrical current draw upon it. As such, a large lambda operating range where the burner assembly maintains a stable combustion will (a) prevent the burner assembly from dictating the fuel cell stack operation by limiting oxidant flow, and/or (b) allow the flow of all cathode and anode off-gases to the burner assembly.

The equivalent diameter of the at least one nozzle of the first fuel inlet or second fuel inlet may be defined by the required velocity through them. Preferably, the velocity of the HCV fuel through the first fuel inlet of the at least one burner unit is between 3 and 6 m/s. More preferably, the velocity of the LCV fuel through the second fuel inlet of the at least one burner unit is between 10 and 35 m/s.

According to an alternative aspect of the present invention there is provided a swirl burner assembly comprising:
(i) a hollow longitudinally elongate body extending along a central axis and having a first end and a second end,
(ii) an end wall at said first end,
(iii) a burner wall located between said first end and said second end, and defining a first volume from said first end to said burner wall, and a second volume from said burner wall to said second end,
(iv) an oxidant inlet into said first volume,
(v) at least one hollow longitudinally elongate burner unit having a burner unit first end extending outwardly of an opening in said body from said first volume, the burner unit extending through an opening in said burner wall from said first volume to said second volume to a burner unit second end, and defining a burner unit inner volume, and comprising:
   (a) an axial-swirl swirl mixer positioned inward of the burner unit and located between said burner unit first end and said burner unit second end, said swirl mixer comprising a plurality of vanes having an inner diameter and an outer diameter, a first side which is positioned towards and opening into said first volume, and a second side positioned towards and opening into said second volume,
   (b) a first fuel inlet into said first volume, said first fuel inlet positioned between said oxidant inlet and said swirl mixer and radially inward of said outer diameter of said plurality of vanes, and
   (c) a second fuel inlet into said second volume proximal said burner unit second end and radially inward of said outer diameter of said plurality of vanes,
   where each at least one burner unit:
   (A) defines a first point which is the point along said central axis closest to said first end where a plane perpendicular to said central axis at said point intersects said plurality of vanes of said burner unit swirl mixer;
   (B) defines a second point which is the point along said central axis furthest from said first end where a plane perpendicular to said central axis at said point intersects said plurality of vanes of said burner unit swirl mixer; and
   (C) defines a geometric mid-point along said central axis equidistant from said first point and said second point,
   wherein:
   each first fuel inlet is located at a point between said oxidant inlet and said swirl mixer which intersects with a plane perpendicular to said central axis, and which plane intersects with a point along said central axis between 1 and 2 equivalent circular diameters of said first fuel inlet flow area from said first point, and
   each second fuel inlet is located at a point between said first fuel inlet and said second end which intersects with a plane perpendicular to said central axis, and which plane intersects with a point along said central axis equal to or less than said inner diameter of said plurality of vanes from said geometric mid-point.

In a further aspect, there is provided a method of operating a fuel cell system as described above, the method comprising the steps of:
(i) supplying an oxidant to said oxidant inlet;
(ii) selectively supplying the first fuel to said first fuel inlet and selectively supplying the second fuel to said second fuel inlet, the first fuel and the second fuel having different calorific values; and
(iii) combusting the selectively supplied fuel or fuels in said second volume after exiting either or both of the swirl mixer or the second fuel inlet.

The term "comprising" as used herein to specify the inclusion of components also includes embodiments in which no further components are present.

Particular and preferred aspects of the invention are set out in the accompanying independent claims.

### BRIEF DESCRIPTION OF THE DRAWINGS

- Figure 1: shows a partial cut-away plan view schematic of a swirl burner assembly suitable for use in the present invention;
- Figure 2: shows a detailed schematic of the feature marked as A' in Figure 1;
- Figure 2A: shows a schematic of an axial burner assembly suitable for use in the present invention;
- Figure 3A: shows a schematic view of a fuel cell system according to the present invention and including the burner assembly of Figures 1 to 2A; and,
- Figures 3B-D: show respective schematic views of alternative fuel cell systems to that of Figure 3A.

A fully and enabling disclosure of the present invention, including the best mode thereof, to one of ordinary skill in the art, is set forth more particularly in the remainder of the specification. Reference now will be made in detail to the embodiments of the invention, one or more examples of which are set forth below. Each example is provided by way of explanation of the invention, not limitation of the invention.

It will be apparent to those of ordinary skill in the art that various modifications and variations can be made in the present invention without departing from the scope of the invention. For instance, features described as part of one embodiment can be used on another embodiment to yield a still further embodiment. Thus, it is intended that the present invention cover such modifications and variations as come within the scope of the appended claims.

Other objects, features, and aspects of the present invention are disclosed in the remainder of the specification. It is to be understood by one of ordinary skill in the art that the present discussion is a description of exemplary embodiments only and is not intended as limiting the broader aspects of the present invention, which broader aspects are embodied in the exemplary constructions.

A listing of reference symbols used herein is given at the end of the description. Repeat use of reference symbols in the present specification and drawings is intended to represent the same or analogous features or elements.

For the purposes of this description, the term burner, axial burner, axial burner assembly, swirl burner, tail-gas burner and swirl burner assembly are to be understood to refer to the burner assembly of the invention, and where appropriate, they are readily interchangeable.

In the specific embodiments below, the fuel cell system is an IT-SOFC (intermediate temperature solid oxide fuel cell) system comprising at least one fuel cell stack, where the fuel cells of the at least one fuel cell stack typically operate in the range 450-650 degC.

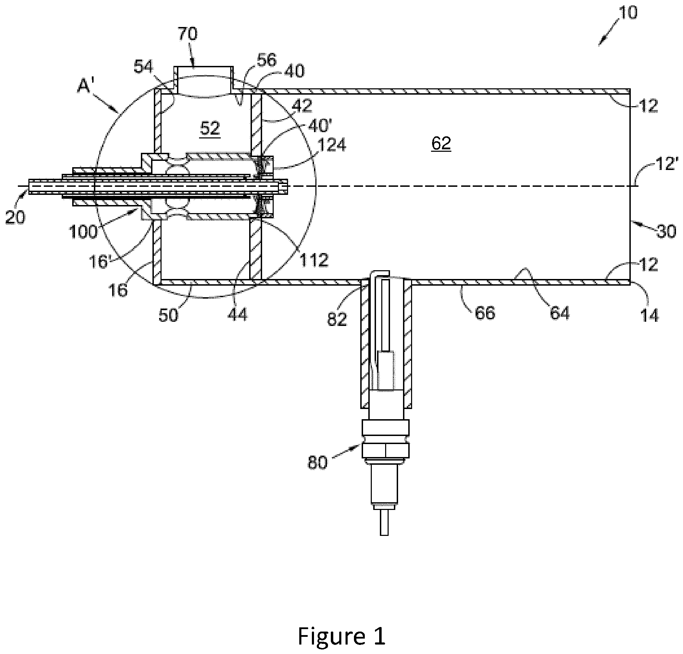

Referring to Figure 1, a swirl burner assembly 10 is shown. The swirl burner assembly 10 comprises a generally cylindrical (i.e. predominantly cylindrical) swirl burner body 12 having a central axis 12', swirl burner body top end wall 16 and swirl burner body bottom end wall 14, where swirl burner body bottom end wall 14 defines swirl burner body downstream end 30.

Swirl burner assembly 10 is segmented by a burner wall 40 which intersects the body 12 radially across its cylindrical shape. Burner wall 40 has a downstream face 42 which faces the swirl burner body downstream end 30. Burner wall 40 also has an upstream face 44 which faces swirl burner body top end wall 16. The portion of body 12 between body top end wall 16 and burner wall 40 defines a first section referred to herein as burner tube 50. The portion of body 12 between burner wall 40 and body bottom end wall 14 defines a second section which is generally cylindrical and has a body inner surface 64 and a body outer surface 66.

First volume 52 is defined by (i.e. is defined between) burner wall upstream face 44, inner face 54 of swirl burner body top end wall 16, and burner tube inner surface 56. Similarly, second volume 62 is defined by (i.e. is defined between) body inner surface 64, swirl burner body bottom end wall 14 and burner wall downstream face 42.

Burner unit 100 has a burner unit first end 20 and a burner unit second end 124. Burner unit first end 20 (the upstream end) protrudes from the swirl burner assembly 10 and particularly from the first volume 52 through opening 16' in swirl burner body top end wall 16. Burner unit second end 124 (the downstream end) protrudes from first volume 52 to second volume 62 through opening 40' in burner wall 40.

Burner wall 40 and swirl burner body top end wall 16 have openings (opening 40' and opening 16' respectively) defined in them to allow the passage or placement of burner unit 100 through them. This allows the manufacture of the burner unit 100 separate to swirl burner body 12. Therefore, assembly simply requires the placement of burner unit 100 through opening 16' in swirl burner body top end wall 16 and opening 40' in burner wall 40.

Shoulder 112 of burner unit 100 abuts burner wall 40 and prevents burner unit 100 progressing further into swirl burner body 12 and second volume 62. Burner unit 100 is then constrained in place by the joining of burner unit 100 to swirl burner body 12 at swirl burner body top end wall 16 by welding. In other embodiments other joining techniques are used, including soldering, brazing, tacking or any other joining techniques known in the art. This results in the creation of a seal between burner unit 100 and swirl burner body top end wall 16 such that the first volume (first volume 52) is enclosed. Similarly, with shoulder 112 abutting burner wall 40, a seal is effected between them.

Although a single burner unit is described below, in other embodiments (not shown) multiple burner units 100 are used where they pass through the swirl burner body 12 (for example through swirl burner body top end wall 16), through first volume 52, through burner wall 40 and into second volume 62.

In the swirl burner assembly 10 as shown in Figure 1, burner unit 100 passes through first volume 52 and is positioned mostly equidistant from burner tube inner surface 56. Part of the burner tube inner surface 56 has an opening to allow the feeding of air through air inlet 70 through the swirl burner body 12 into the first volume 52. Similarly passing through the swirl burner body 12 is igniter opening 82 through which igniter 80 protrudes into second volume 62.

The positioning of igniter 80 and air inlet 70 are shown in Figure 1 to be opposed to one another across an axis of swirl burner body 12, but the positioning of air inlet 70 and igniter 80 may be varied. Air is fed into the first volume 52, and initial ignition occurs in the second volume 62 due to a sparking of igniter 80.

Second volume 62 defines a flame tube, wherein the combustion of gases is to occur.

A swirl burner body exhaust is positioned proximal swirl burner body bottom end wall 14 and exhausts gases from, i.e. is in fluid flow communication with, second volume 62, but for simplicity and convenience it is not shown in Figure 1.

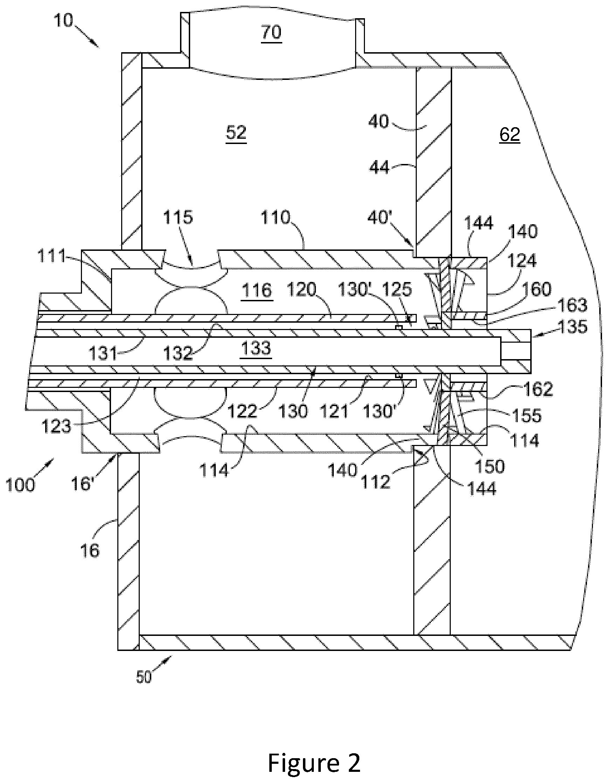

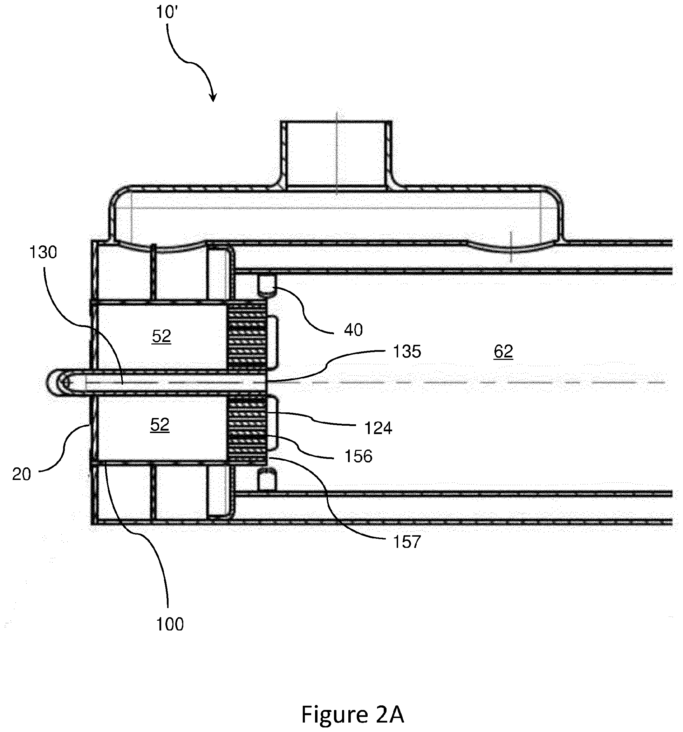

Referring to Figure 2, a more detailed view of the swirl burner assembly 10 and burner unit 100 is shown. The portion of burner unit 100 passing through first volume 52 has a burner unit outer body 110 which is mostly cylindrical and is aligned in the same cylindrical direction (on central axis 12') as swirl burner body 12. Burner unit 100 has a burner unit top inner surface 111 which faces in the general direction of burner wall 40. The end of the burner unit 100 which passes through opening 40' in burner wall 40 into second volume 62 is burner unit second end 124 (i.e. a burner unit bottom end). Burner unit outer body 110 is a walled body and has a thickness. The inner surface of burner unit outer body 110 is inner face 114. Burner unit inner volume 116 is defined by (i.e. defined between) inner face 114, burner unit top inner surface 111 and burner unit second end 124.

Burner unit outer body 110 protrudes through opening 40' in burner wall 40 into second volume 62. Where burner unit outer body 110 protrudes through burner wall 40, burner unit outer body 110 has shoulder 112. Shoulder 112 is stepped remote from burner unit first end 20 such that said wall thickness of burner unit outer body 110 is reduced (in the assembled swirl burner assembly 10, this is at the point where the burner unit 100 reaches the burner wall downstream face 42 before protruding through burner wall 40). The portion of burner unit outer body 110 with a reduced thickness wall is outer collar 140, where outer collar 140 shares the same inner face 114 and has outer collar outer surface 144. Outer collar 140 protrudes through burner wall 40 into second volume 62 as far as the burner unit second end 124.

Shoulder 112 is restrained against burner wall downstream face 42, this, advantageously, prevents shoulder 112 from passing through burner wall upstream face 44 when burner unit 100 is positioned through the openings in the burner wall 40 and the swirl burner body top end wall 16. When assembling the swirl burner assembly, this allows the simple insertion of burner unit 100 into swirl burner body 12, without the need for measurement of how far it should be positioned through first volume 52. This allows the machining of burner unit 100 and positioning of shoulder 112 to define the position of burner unit 100 and results in a more uniform positioning of burner units 100 relative to the swirl burner body 12 regardless the number of swirl burner assemblies 10 that are manufactured. It also results in a faster assembly process of a swirl burner assembly 10, since no additional measurements is required to position the burner unit 100 if the manufacturing is uniform.

Burner unit outer body 110 has at least one air inlet hole 115 (in this embodiment, a plurality of air inlet holes 115) adjoining first volume 52 and burner unit inner volume 116 through inner face 114. These air inlet holes 115 allow the passage of gases from first volume 52 into burner unit inner volume 116 (or in an opposite direction, however, the operation of the swirl burner assembly 10 should discourage this). Air inlet holes 115 are cylindrical in shape and they are arranged around the circumference of the cylindrical shape of the outer body 110. In other embodiments (not shown) other geometries of shapes are possible for the air inlet holes 115..

Aside from air inlet holes 115, first volume 52 is normally sealed from burner unit inner volume 116 within it. This ensures that air from air inlet 70 must travel through air inlet holes 115 before flowing into second volume 62.

Running parallel and positioned radially internal to burner unit outer body 110 is HCV fuel tube 120. HCV fuel tube 120 protrudes through burner unit top inner surface 111 within burner unit 100 into burner unit inner volume 116. HCV fuel tube 120 is a walled cylinder with HCV fuel tube inner surface 121 and HCV fuel tube outer surface 122. At the downstream end of HCV fuel tube 120 is HCV inlet 125.

Running parallel and positioned radially internal to the HCV fuel tube 120 is the LCV fuel tube 130. Fingers 130' extend from LCV fuel tube 130 and centralise it within HCV fuel tube 120. The LCV fuel tube 130 protrudes through burner unit top inner surface 111 passes through the HCV tube internal volume 123, through HCV inlet 125, through burner unit second end 124 (through opening 40' in burner wall 40) and into second volume 62. LCV fuel tube 130 is predominantly a walled cylinder with inner surface 131 and outer surface 132. At the downstream end of LCV fuel tube 130 is LCV inlet 135.

HCV tube internal volume 123 is defined by (i.e. defined between) HCV fuel tube inner surface 121, LCV tube outer surface 132, HCV inlet 125 and burner unit first end 20. LCV tube internal volume 133 is defined by (i.e. defined between) LCV tube inner surface 131, LCV inlet 135 and burner unit first end 20. Although not shown in the figures, the end of the HCV fuel tube 120 which continues in the upstream direction will be connected to an HCV fuel supply; for example, HCV fuel tube 120 may approach swirl burner assembly 10 from a direction perpendicular to burner unit 100 before reaching burner unit first end 20. Likewise, the end of the LCV fuel tube 130 which continues in an upstream direction will be connected to an LCV fuel supply.

HCV inlet 125 is positioned within the burner unit inner volume 116, upstream of burner wall 40, and LCV inlet 135 is positioned in second volume 62, thus downstream of burner wall 40. HCV inlet 125 is on a radial plane with shoulder 112, i.e. a plane perpendicular to the axis of the cylinder of swirl burner body 12. LCV inlet 135 is further in the downstream direction, i.e. further toward swirl burner body downstream end 30 than the burner unit second end 124.

LCV fuel tube 130 has no opening leading directly to HCV fuel tube inner volume 123. That is to say that HCV tube internal volume 123 is sealed aside from the opening at HCV inlet 125 which is an opening to burner unit inner volume 116. Likewise, the only opening within swirl burner assembly 10 for LCV fuel tube 130 is the opening at LCV inlet 135 into second volume 62, i.e. LCV tube internal volume 133 is sealed aside from LCV inlet 135. As previously discussed, although not shown, the ends of HCV fuel tube120 and LCV fuel tube 130 continuing in the upstream direction will be connected to appropriate fuel supplies.

Such sealing ensures that there is no mixing of the flows through the fuel pipes or the air within the internal volumes of each pipe. In operation there will be a flow through the pipes in the downstream direction which will further ensure that no flow of fuel or air can flow back down the pipes when there is a flow due to the pressure of the flow.

Downstream of HCV fuel inlet 125, i.e. further toward swirl burner body downstream end 30 and upstream of LCV fuel inlet 135, i.e. further away from swirl burner body downstream end 30 is swirl mixer 150. Swirl mixer 150 has vanes 155 for directing a flow which passes through them. Vanes 155 extend from inner face 114 of outer collar 140 to inner collar 160, and more specifically inner collar outer surface 162. Inner collar 160 is positioned inward of outer collar 140, outward of the LCV fuel tube 130 and extends from the centre of the swirl mixer 150 in a downstream direction toward swirl burner body downstream end 30. The inner collar 160 extends no further in the downstream direction than the burner unit second end 124, which is the same as the outer collar 140. The LCV fuel tube 130 passes between the inner collar inner surface 163.

Swirl mixer 150 is an axial-swirl swirl mixer. Vanes 155 are any number of vanes which influence the flow that passes through them, such that they cause an axial-swirl. The axial-swirl is important for reducing the flame length since a recirculation zone is created within the flame tube (i.e. second volume 62).

Outer collar 140 and inner collar 160 advantageously have an effect on the flow of oxidant and fuel into second volume 62, and in the positioning of the recirculation zone formed by swirl mixer 150. This results in an improved swirl for reducing the flame length and controls the flame seat such that it is close to swirl mixer 150 but not exposed to it. This protects vanes 155 and LCV inlet 135 from being exposed to direct combustion thus preventing deformation such as pitting on the vane surface or inlet surface.

Figure 2A shows an alternative arrangement of the swirl burner assembly 10 of Figures 1 and 2. A burner assembly that is axial burner assembly 10' is shown. The axial burner assembly 10' has the same features described above with reference to the swirl burner assembly 10 other than the swirl mixer 150. Therefore, like reference numerals are used to describe the axial burner assembly 10' and the description with reference to the swirl burner assembly 10 applies to the axial burner assembly 10'.

The axial burner assembly 10' has a burner wall 40 that defines the first volume 52 and second volume 62. The LCV fuel tube 130 passes through the first volume 52 and is connected to the LCV inlet 135 that is positioned in the second volume 62 for introducing fuel directly to this second volume 62 without introducing the fuel to the first volume 52 and mixing with an oxidant. Likewise, the oxidant inlet and HCV inlet each respectfully introduce oxidant and HCV fuel into the first volume 52.

The burner 100 is integrally formed within the assembly and has a second end 124 that faces the second volume 62. At the second end of the burner unit 124 there is provided a burner plate 156. The burner plate 156 is positioned across the burner wall 40 and faces the first volume 52 on one side and the second volume 62 at the other side. Therefore, the burner plate 156 replaces the swirl mixer 150 of the earlier embodiment.

The burner plate 156 has a plurality of openings 157 that define burner plate channels or passage ways 157 between the first volume 52 and second volume 62. Therefore, an oxidant and fuel that mixes in the first volume 52 passes through the plurality of burner plate passageways 157 and combusts in the second volume 62.

The plurality of burner plate passageways 157 allows the flame seat to be very close to the second end 124 of the burner unit 100.

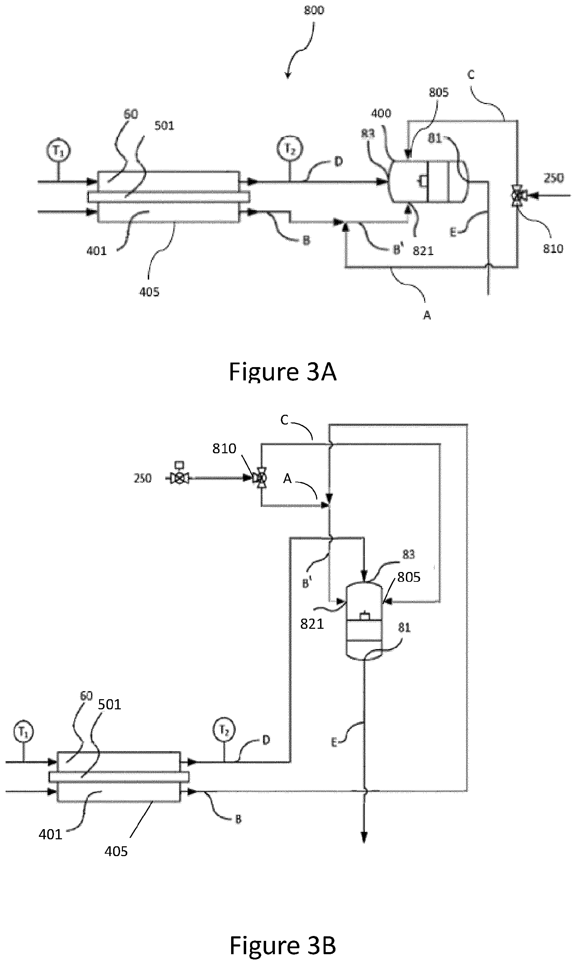

Referring to Figure 3A, this is a schematic view of part of a piping and instrumentation diagram of the fuel cell system 800. This shows a number of fluid flow inputs and outputs of a tail-gas burner 400 that optionally has the features of the swirl burner assembly 10 discussed above or a burner without a swirl mixer 150, such as the axial burner assembly 10' discussed with reference to Figure 2A.

A fuel cell stack 405 is shown schematically. Each fuel cell in the stack has a cathode side 60, an anode side 401, and an electrolyte layer 501 between the cathode side 60 and the anode side 401. A fuel is provided to the fuel cell stack 405. The fuel provided can be the HCV fuel, such as a fuel gas or natural gas. The fuel can be reformed through a reformer prior to entry to the fuel cell stack 405.

The fuel cell stack 405 has common outlets from the cathode sides 60 and the anode sides 401 of all the respective cells. The outlet from the cathode side 60 is the cathode off-gas pipe system D, this provides a cathode off-gas fluid flow path D between the outlet of the cathode side 60 and the cathode off-gas inlet 83 of the tail gas burner 400. It is noted that the cathode off-gas inlet 83 is preferred to be the oxidant inlet 70 discussed above with reference to the earlier figures.

Whilst it is shown that the cathode off-gas fluid flow path D is connected directly between the cathode side 60 and the tail-gas burner 400, in some embodiments, the cathode off-gas fluid flow path D may pass through further systems such as heat exchangers. The air to the burner may also be provided from other sources than the cathode off-gas fluid flow path D. For instance, the oxidant inlet 70 and cathode off-gas inlet 83 may be separate and provide different sources of air.

The anode side 401 is in fluid communication with the anode off-gas inlet 821 through anode off-gas pipe system B which forms the anode off-gas fluid flow path B. The anode off-gas inlet 821 is the inlet to the LCV fuel tube 130 that leads to the LCV inlet 135 as discussed above with reference to the swirl burner assembly 10 or axial burner assembly 10'. The LCV fuel and anode off-gas fuel terms are interchangeable.

A fuel source 250 for a fuel gas (i.e. a HCV fuel) is provided. The fuel source 250 is connected to a fuel gas inlet 805 on the tail gas burner 400 through a fuel gas fluid flow C that is a fuel gas pipe system C. The fuel gas inlet 805 is the inlet of the HCV fuel tube 120 that leads to the HCV inlet 125 as discussed above with reference to the swirl burner assembly 10 and or axial burner assembly 10'. The HCV fuel, fuel gas and natural gas terms are interchangeable.

The fuel source 250 may be provided to various other parts of the fuel cell system 800, such as providing fuel for the fuel cell stack 405. This is not shown in the partial system view of Figure 3A.

On the fuel gas pipe system C there is provided a valve 810. The valve 810 is a three-way valve in communication with the fuel source 250, the fuel gas pipe system C, and a bypass line A. The bypass line A forms a fuel gas to anode off-gas fluid flow path A between the fuel source 250 and the anode off-gas pipe system B. Therefore, the bypass line A allows the delivery of fuel gas to the anode off-gas inlet 821.

A portion of the anode off-gas pipe system B that is downstream from the connection with the bypass line A (i.e. between the bypass line and the off-gas inlet 821), will therefore allow the flow of a fuel gas and an anode off-gas. This portion of the connection is the fuel gas and anode off-gas fluid flow path B' and therefore mixing of the two fuels can occur in this mixing portion of the anode off-gas piping system B'. Therefore, the bypass line A allows the delivery of a fuel gas (i.e. HCV fuel) to the LCV inlet 135. This delivery is controlled as discussed in detail below.

Whilst mixing of the fuel gas and the anode off-gas is described as occurring in the mixing portion of the anode off-gas piping system B', a mixer may be provided to allow mixing of the fuels. The mixer may be in the form of a pipe that encourages turbulent flow, or a larger chamber for the containing of the fuel, or other combinations to result in the mixing of fuels.

The tail-gas burner 805 has a tail-gas burner exhaust 81 where combusted fuel, i.e. a fuel gas, anode off-gas or a combination thereof with an oxidant, is exhausted from the tail-gas burner 805. The exhaust gas is then passed through a tail-gas burner off-gas fluid flow path E for use elsewhere - which may be out of the fuel cell system, such as for CHP systems.

As discussed above, the three-way valve 810 can deliver the fuel flow to the anode off-gas pipe system B and to the fuel gas pipe system C and the inlets and thus HCV inlet 125 and LCV inlet 135 connected to these. The three-way valve 810 is not in operation at all times. Instead, it can be operated to direct all the fuel gas flow to the fuel gas pipe system C, or all the flow to the anode off-gas pipe system B. The operation of the valve 810 is dependent as to what mode the fuel gas system 800 is operating, such as the start-up, warming, operating, shut-down and at what temperature the fuel cell system 800 and particularly the fuel cell stack 405 is operating at.

In some embodiments, the three-way valve 810 is operable to divert a portion of flow to the anode off-gas pipe system B, thus allowing simultaneous fuel gas flow to both the fuel gas inlet 805 and the anode off-gas inlet 821. A controller may control the (variable) flow ratio to that valve.

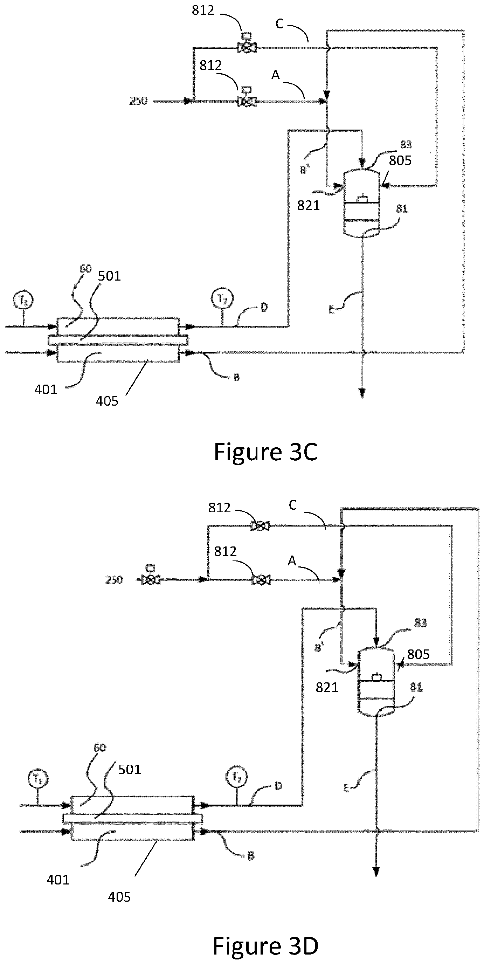

Figure 3A (and Figures 3B, 3C and 3D) is a piping and instrumentation diagram (P&ID), therefore it will be appreciated that the inlets to the tail-gas burner 400 shown in these figures are merely illustrative, that is to say, for instance, that the anode off-gas inlet 821 is shown entering the tail-gas burner at the side in Figure 3A. However, Figure 2 would require the anode off-gas inlet 821 to be positioned at the first end of the burner assembly 10 due to the location of LCV fuel tube 130. Therefore, Figure 3A does not limit to the connection positions shown, but rather shows how components are being connected. This likewise applies to the fuel gas inlet and the cathode off-gas inlet 83. Likewise, the symbol used for a tail-gas burner 400 of Figure 3A does not show a burner unit 100, swirl mixer 150 or burner plate 156. However, the tail-gas burner 400 can be the swirl burner assembly 10 or axial burner assembly 10' or other burner assemblies as previously discussed.

Referring to Figures 3B, 3C and 3D, these show respective schematic views of alternative fuel cell systems with minor modifications over that of Figure 3A. All reference numerals depict the same devices and pipe systems. Figure 3B merely shows a two-way on/off fuel supply valve upstream of the three-way valve 250, but is otherwise the same layout as Figure 3A, although the arrangement is depicted differently. Figures 3C and 3D merely replace the three-way valve 250 of Figure 3A at which the pipe systems A and C are connected together with respective two-way, on/off valves 812 one respectively in each of pipe systems A and C, where those meet upstream at a permanently open joint connection. Figure 3D additionally has a two-way on/off fuel supply valve upstream of the open joint connection.

The pipe systems described can be any form suitable for the transfer of fluids, particularly fuels, air, oxidant and off-gases. The pipe systems can be a form of tubular pipes, flexible pipes, etc. The pipe systems may need to withstand temperature fluctuations, including high temperature flows.

In the fuel cell system, the tail-gas burner has four main modes of operation:
1) Warm-up, non-reforming:
   Where the fuel cell system is cold, it is necessary to heat the stack prior to reaching the operational state. This initial phase raises the temperature of the fuel cell stack outlet to greater than 275degC, more preferably 300degC. The fuel may be gaseous or vaporised, but in this mode it is (only) HCV fuel which is directly fed to the burner.

Considering burner assembly 10 or 10' of Figures 1, 2, and 2A and the fuel cell system 800 of Figure 3A, in this mode, the HCV fuel (fuel gas) is fed into the burner through HCV fuel tube 120 of the burner unit 100. Therefore, the three-way valve 810 is directing all of the HCV fuel from the fuel source 250 to the fuel gas inlet 805 via the fuel gas pipe system C. The HCV fuel exits HCV fuel tube 120 at HCV inlet 125. Simultaneous to this operation, air is fed into first volume 52 through air inlet 70, this is preferably cathode off-gas via the cathode off-gas pipe system D. The air inside this volume passes through air inlet holes 115 into burner unit inner volume 116 and flows in the downstream direction toward burner body downstream end 30.

Prior to reaching the swirl mixer 150 or burner plate 156, i.e. upstream of swirl mixer 150 or burner plate 156, the HCV fuel and the air are exposed to one another for the first time since entering burner body 12. It is here that initial pre-mixing of the HCV fuel and the air takes place. The HCV fuel and air mixture passes through swirl mixer 150 or the burner plate 156. The greatest degree of mixing between the HCV fuel and the air occurs through swirl mixer 150 and just into the second volume 62. This area just downstream of the swirl mixer 150 is the mixing zone. A high degree of mixing of the HCV fuel with the air is important to allow complete combustion and reduce the amount of unwanted emissions, such as CO and NOₓ.

Although the term 'air' has been used, 'oxidant' is also a commonly used term to describe the oxygen carrying medium, along with other terms used in the art. As such air and oxidant are interchangeable for the purposes of this specification.

The mixture of HCV fuel and air is then ignited via igniter 80. Swirl mixer 150 is an axial-swirler, which results in a reverse flow region or recirculation zone within the second volume 62. The recirculation zone is such that it impacts not only the combustion zone, but also the mixing zone. This has a number of benefits: ideally combustion of the HCV fuel mix should occur in this zone since the mixing will be most intense; also this reverse flow has the effect of reducing the length of the flame. As a result of the recirculation zone, the flame seat is just downstream of the swirl mixer 150. Likewise, the burner plate 156 has the effect of confining the flames to a smaller region close to the burner plate 156. This is due to the plurality of burner plate passageways 157 that result in an increased number of flames with a shorter length.

During this operation mode, the air flow rate is controlled by the control system which, amongst other measurements, measures the inlet temperature to the burner. The HCV fuel flow is controlled by the control system using a proportional control valve which varies the HCV fuel flow rate according to the temperature at the burner downstream end. The air flow rate through the burner in this mode can vary from 70 to 116 SLM. The HCV fuel flow rate is expected to be between 0.8 to 6 SLM. Where the air-fuel equivalence ratio (lambda) is equal to or less than 4.

The varying of the arrangement and positioning of HCV fuel inlet 125 along with the size of the holes in the inlet can have an effect on the combustion and functioning of the burner such as producing different emissions which are beyond the regulated limits.

### 2) Warm-up. Reforming. With warm tail-gas burner.

The second mode of operation for swirl burner assembly 10 or axial burner assembly 10' occurs at fuel cell stack temperatures greater than 275degC, more preferably 300degC. This mode transitions the fuel from a directly fed HCV fuel to a LCV fuel from the fuel cell stack 405. That is to say that the LCV fuel may be a reformate gas or anode off gas from the reaction of the fuel cell.

The LCV fuel (anode off-gas) is fed into the tail gas burner 400 through LCV fuel tube 130. As shown in Figures 3A to 3D, the anode off-gas is supplied from the anode side 401 of the fuel cell stack 405 through the anode off-gas pipe system B to the anode off-gas inlet 821. This LCV fuel tube 130 passes through the centre of the inner diameter of swirl mixer 150 or inner region of the burner plate 156 and into second volume 62. It is only at this point that the LCV fuel is fed into second volume 62 through LCV inlet 135. Notably this is downstream of the flame seat of the HCV fuel.

Since the LCV fuel does not pass through swirl mixer 150, there is a less intense mixing area with air in second volume 62 and only a small amount of mixing with the air prior to combustion occurs when compared to the HCV fuel. Likewise, because the LCV fuel does not pass through the burner plate 156, there is also only a small amount of mixing with oxidant prior to combustion. However, for the LCV fuel, this is preferred since the composition does not favour a high degree of mixing pre-combustion to result in the lower emissions of CO and NOx.

Combustion occurs downstream of LCV fuel inlet 135. There is a complementary effect of the swirl mixer 150: the combustion of an LCV fuel typically results in a longer flame, i.e. a greater length than a HCV flame, this is partly due to the less intense combustion and greater volumetric flow; the reverse flow region from the swirl mixer 150, reduces the flame length of the LCV fuel flame. Such a reduction in flame length is useful for space saving, allowing a shorter, more compact swirl burner body 12, but also for protecting instrumentation toward the downstream end of, or even beyond the downstream end of the swirl burner assembly 10 (i.e. downstream of body bottom end wall 14).

Warm-up. Reforming. With hot tail-gas burner.

As the temperature of the stack increases toward 550degC and is in the range of 500degC to 550degC, a sub mode of this operating mode occurs.

The HCV fuel (fuel gas) is redirected and fed into the burner through the LCV fuel tube 130 of the burner unit 100. Therefore, the three-way valve 810 or two-way valves 812 are moved to direct all of the HCV fuel from the fuel source 250 to the anode off-gas inlet 821 via the bypass line A that connects the fuel source 250 to the anode off-gas pipe system B. The LCV fuel and HCV fuel is thus fed into swirl burner assembly 10 through LCV fuel tube 130. The anode off-gas is supplied from the anode side 401 of the fuel cell stack 405 through the anode off-gas pipe system B to the anode off-gas inlet 821. This LCV fuel tube 130 passes through the centre of the inner diameter of swirl mixer 150 and into second volume 62. It is only at this point that the HCV fuel and LCV fuel is fed into second volume 62 through LCV inlet 135.

The HCV fuel and LCV fuel, therefore, converge in the mixing portion of the anode off-gas pipe system B' and mixing of the fuels occurs in this area and through the LCV tube 130. Since the mixture of HCV fuel and LCV fuel does not pass through swirl mixer 150, there is a less intense mixing area with air in second volume 62 and only a small amount of mixing with the air prior to combustion. However, due to the high temperature in this sub-mode there would be a tendency for coke formation if HCV fuel was fed into HCV fuel inlet 125, whereas feeding the mixture of LCV fuel and HCV fuel into the LCV inlet 135 reduces the likelihood of coke formation (because hydrogen is present in the LCV fuel) and therefore the tendency for blocking of the HCV fuel lines.

The provision of the bypass line A therefore allows more flexibility in terms of how the system is operated and hence improves system performance (e.g. response times): the continued use in this sub-mode of a mix of HCV fuel as well as LCV fuel can improve warm-up time in this mode, because total fuel flow is increased.

To explain, when the system is in the final stages of warm up it is necessary to flow more fuel than during steady state operation, the fuel cell is consuming the same or more fuel than at steady state, but producing less power, and the heat input to the fuel cell is higher in-order to raise its temperature. While just providing more LCV fuel is possible, it may not be the optimal choice for fastest warm-up, with higher flow rates and larger system components required; for example, the reformer may need to be larger if only LCV was supplied to achieve the same warm-up time. Furthermore, the warm-up may be slowed because of increased flow of fuel into the fuel cell because of the endothermic reaction of reforming within the stack itself.

As the temperature of the fuel cell stack increases toward 550degC, the control system selectively reduces the HCV flow and hence the mixed operation of the HCV and LCV fuels moves toward a solely LCV fuel operation as the fuel cell undertakes electrochemical reactions.

### 3) Steady state. Full power.

In the third mode of operation, the fuel cell stack is typically at about 550 degC (the exact temperature of individual fuel cells and individual fuel cell components will vary; the fuel cells of the fuel cell stack will operate in the range of about 500-610 degC). This is a predominantly LCV fuel situation. In this mode, the LCV fuel continues to be fed into the burner through LCV tube 130. However, the LCV fuel flow rate is now determined by the fuel cell stack, and the electrical output required by the fuel cell system.

### Steady state. Low power

The air flow through the fuel cell system during this operation sub-mode is controlled by the temperature of the fuel cell stack. The outlet temperature of the burner is monitored, and if it drops below a certain threshold, additional HCV fuel is added to increase the temperature of the system which will maintain or increase the temperature of the fuel cell stack.

Where additional HCV fuel is required, this is again fed into the burner through the LCV fuel tube 130 of the burner unit 100. Therefore, the three-way valve 810 or two-way valves 812 are moved to direct all of the HCV fuel from the fuel source 250 to the anode off-gas inlet 821 via the bypass line A that connects the fuel source 250 to the anode off-gas pipe system B. The mixing of the fuels occurs in the mixing portion of the anode off-gas pipe B' and the in the LCV tube 130.

This low power sub-mode is also a sub-mode where, because of the higher operating temperatures, there could be a tendency for coke formation if HCV fuel was fed into the HCV inlet 125. The tendency for coking to occur reduces with HCV fuel and LCV fuel mixing and supplied through the LCV inlet 135 partly because the of the humidity of the LCV fuel which when mixed with the HCV fuel aids with the reduction of coke. Feeding HCV fuel as well as LCV fuel can also improve reforming water use, because water is used in steam reforming which is the flow into the fuel cell stack 405. Feeding HCV fuel as well as LCV fuel can allow the fuel cell stack 405 to be hotter or for the system to operate more efficiently, because total fuel flow can be increased.

Thus, the provision of the bypass line A again allows more flexibility in terms of how the system is operated thereby improving system performance.

### 4) Shut down

In the fourth mode of operation, the LCV fuel flow is reduced to reduce fuel cell stack and fuel cell system temperatures until fuel cell stack reaches around 450degC, HCV fuel flow to the fuel cell system is stopped, which in turn stops the flow of LCV fuel through LCV fuel inlet 135 is stopped and combustion ceases. The fuel cell system is then left to cool down naturally.

Table 1 below summarises how the present invention improves operation of the system in the four main operating modes; in particular, it shows the two sub-modes where it is advantageous to flow HCV fuel into the tail gas burner post-swirl mixer (or post burner plate), so as to minimise the tendency for carbon formation. By pre-swirl or post-swirl mixer feed is meant where the fuel in question enters the tail gas burner (i.e. before or after the swirl vanes or the burner plate in the axial burner assembly).

'Hot TGB' is typically when the air supply/cathode off-gas (stream D) to the tail gas burner is >500 - 550C, whereas 'Warm TGB' is typically when the air inlet to the tail gas burner is <500 - 550C. Transition between modes could be gradual and so it may be beneficial to have a gradual transition of HCV fuel from pre to post-swirl mixer (pre to post burner plate).

**Table 1**

| **Operating Mode** | **System with Separate HCV and LCV Supplies** | | **System with Interconnected HCV and LCV Supplies** | |
|---|---|---|---|---|
| | **HCV fuel** | **LCV fuel** | **HCV fuel** | **LCV fuel** |
| Ignition and warm-up no reforming | Pre-swirl mixer | None | Pre-swirl mixer | None |
| Warm-up with reforming and 'warm TGB' | Pre-swirl mixer | Post-swirl mixer | Pre-swirl mixer | Post-swirl mixer |
| Warm-up with reforming and 'hot TGB' | None | Post-swirl mixer | **Post-swirl mixer** | Post-swirl mixer |
| Steady State - Full Power | None | Post-swirl mixer | None | Post-swirl mixer |
| Steady State - Low Power | None | Post-swirl mixer | **Post-swirl mixer** | Post-swirl mixer |
| Shutdown and 'hot TGB' | None | Post-swirl mixer | None | Post-swirl mixer |
| Shutdown and 'warm TGB' | Pre-swirl mixer | Post-swirl mixer | Pre-swirl mixer | Post-swirl mixer |

Overall the design and operation of the fuel cell system and swirl burner assembly results in lower emissions when fuelled by various fuels in single mode and mixed mode, reduction in coke formation along with operating over a large lambda range and having a small flame length allowing for a compact design.

The present invention is not limited to the above embodiments only, and other embodiments will be readily apparent to one of ordinary skill in the art without departing from the scope of the appended claims.

### Reference signs:

- 10: Swirl burner assembly
- 10': Axial burner assembly
- 12: Swirl / axial burner body
- 12': Central axis
- 14: Swirl / axial burner body bottom end wall
- 15: Swirl / axial burner body exhaust
- 16: Swirl / axial burner body top end wall
- 20: Burner unit first end
- 30: Swirl / axial burner body downstream end
- 40: Burner wall
- 42: Burner wall downstream face
- 44: Burner wall upstream face
- 50: Burner tube
- 52: First volume
- 54: Inner face
- 56: Burner tube inner surface
- 60: Cathode side
- 62: Second volume
- 64: Body inner surface
- 66: Body outer surface
- 70: Air inlet
- 80: Igniter
- 81: Tail gas burner exhaust
- 82: Igniter opening
- 83: Cathode-off gas inlet (oxidant inlet)
- 100: Burner unit / Burner
- 110: Burner unit outer body
- 111: Burner unit top inner surface
- 112: Shoulder
- 114: Inner face
- 115: Air inlet holes
- 116: Burner unit inner volume
- 120: HCV fuel tube
- 121: HCV fuel tube inner surface
- 122: HCV fuel tube outer surface
- 123: HCV tube internal volume
- 124: Burner unit second end
- 125: HCV inlet
- 130: LCV fuel tube
- 130': Finger
- 131: LCV fuel tube inner surface
- 132: LCV fuel tube outer surface
- 133: LCV tube internal volume
- 135: LCV inlet
- 140: Outer collar
- 144: Outer collar outer surface
- 150: Swirl mixer
- 155: Vanes
- 156: Burner plate
- 157: Burner plate passageways
- 160: Inner collar
- 162: Inner collar outer surface
- 163: Inner collar inner surface
- 250: Fuel source
- 400: Swirl burner assembly / tail-gas burner
- 401: Anode side
- 405: Fuel cell stack
- 501: Electrolyte layer
- 800: Fuel cell system
- 805: Fuel gas (HCV fuel) inlet
- 810: Three-way valve
- 812: Two-way valve
- 821: Anode off-gas inlet

- A: fuel gas to anode off-gas fluid flow path - bypass line
- B: anode off-gas fluid flow path - anode off-gas pipe system
- B': fuel gas and anode off gas fluid flow path - mixing portion of anode off-gas pipe system
- C: fuel gas fluid flow path - fuel gas pipe system
- D: cathode off-gas fluid flow path - cathode off-gas pipe system
- E: tail-gas burner off-gas fluid flow path

## Claims

1. A fuel cell system comprising:
a burner assembly comprising:
(i) a hollow longitudinally elongate body extending along a central axis and having a first end and a second end,
(ii) a burner wall located between said first end and said second end, and defining a first volume from said first end to said burner wall, and a second volume from said burner wall to said second end,
(iii) an oxidant inlet into said first volume, the oxidant inlet for providing an oxidant flow therethrough,
(iv) at least one hollow elongate burner abutting said burner wall or extending through an opening in said burner wall from said first volume to said second volume and comprising:
(a) a burner plate or mixer having a first side opening into said first volume, and a second side opening into said second volume,
(b) a first fuel inlet into said first volume for feeding a first fuel from a first fuel passageway to said first volume; and,
(c) a second fuel inlet into said second volume for feeding a second fuel from a second fuel passageway to said second volume;
wherein the system further comprises at least one connection for selectively connecting the first fuel passageway to the second fuel passageway for delivery of a mixture of the first fuel and second fuel to the second fuel inlet.

2. The system of claim 1, wherein the system comprises a three-way valve for selective connection of the first fuel passageway to the second fuel passageway.

3. The system of any preceding claim, wherein, when comprising the mixer, the mixer is an axial swirl mixer comprising a plurality of vanes having a first side opening into said first volume, and a second side opening into said second volume, or wherein when comprising the burner plate, said burner plate comprises a plurality of passageways extending between said first volume and said second volume.

4. The system of any preceding claim, further comprising a fuel cell stack, and wherein the first fuel comprises a fuel gas that has not passed through the fuel cell stack.

5. The system of any preceding claim, wherein the second fuel is an anode off-gas from a fuel cell stack of the fuel cell system, the system optionally further comprising an off-gas pipe system connecting an outlet of an anode of the fuel cell stack to said second fuel inlet for the delivery of the second fuel to the second fuel inlet, wherein the second fuel passageway forms part of the anode-off-gas pipe system.

6. The system of any preceding claim, further comprising a first gas pipe system connecting a fuel gas source to said first fuel inlet for the delivery of the first fuel gas to said first fuel inlet, wherein the first fuel passageway forms part of the first gas pipe system, and optionally wherein the first fuel is any one or more of mains supplied gas, natural gas, start-up fuel or top-up fuel.

7. The system of any preceding claim, wherein the connection comprises a bypass line that extends from said first fuel passageway to said second fuel passageway for selectively diverting the first fuel from said first fuel inlet to said second fuel inlet.

8. The system of any preceding claim, wherein at least one of the first fuel inlet and the second fuel inlet is a nozzle, and optionally wherein the at least one nozzle is defined by at least one hole in its respective fuel inlet.

9. The system of any preceding claim, wherein at least one of the first fuel inlet and the second fuel inlet is an orifice in, respectively, a first fuel pipe or a second fuel pipe, and optionally wherein said first, and/or second, fuel inlet is not positioned at an end of its respective fuel pipe, but is positioned along its respective fuel pipe.

10. A method of operating a fuel cell system according to any of the preceding claims, the method comprising the steps of:
(i) directing an oxidant to said oxidant inlet;
(ii) selectively directing the first fuel to said first fuel inlet and selectively directing the second fuel to said second fuel inlet; and
(iii) combusting the selectively directed fuel or fuels in said second volume after exiting one of:
a. the burner plate or mixer;
b. the second fuel inlet; or
c. the burner plate or mixer and the second fuel inlet.

11. The method of claim 10, comprising use of the connection for connecting the first fuel passageway to the second fuel passageway for delivering a mixture of the two fuels to the second fuel inlet, whereby the mixture of the two fuels is combusted in the said second volume after exiting the second fuel inlet.

12. The method according to claim 10, wherein the fuel cell system is selectively operable in a first mode, a second mode, a third mode, and an optional fourth mode, each mode characterised as follows:
(i) the first mode has the first fuel directed to said first fuel inlet via the first fuel passageway, said oxidant and said first fuel thus converging and mixing in said first volume between said first fuel inlet and said burner plate or mixer, and wherein the second fuel is not supplied to the second fuel inlet;
(ii) the second mode has said first fuel directed to said first fuel inlet via the first fuel passageway, said oxidant and said first fuel thus converging and mixing in said first volume between said first fuel inlet and said burner plate or mixer, and said second fuel is supplied to said second fuel inlet, said oxidant and said second fuel thus converging and mixing in said second volume;
(iii) the third mode has said first fuel directed to said second fuel inlet via said at least one connection, and said second fuel is also directed to said second fuel inlet, said first fuel and said second fuel thus mixing for exiting the second fuel inlet as a mixture of the two fuels,
wherein said oxidant and said mixture then converge and mix in said second volume for combustion;
(iv) the optional fourth mode has said second fuel supplied to said second fuel inlet, said oxidant and said second fuel converging and mixing in said second volume for combustion, and wherein the first fuel is not supplied to either the first fuel inlet or the second fuel inlet.

13. The method of claim 12, the system further having a selectable fifth mode in which said first fuel and said second fuel are both directed to said second fuel inlet, said first and second fuels thus converging and mixing, the mixture then converging and mixing with said oxidant in said second volume for combustion, and wherein the first fuel is also directed to the first fuel inlet for mixing with the oxidant also in the first volume.

14. The method of claim 13, wherein the ratio of the mixture of the first and second fuels is variable and controlled by a processor.

15. The method of claim 13 or claim 14, wherein the ratio of the flow rates of the first fuel to the first fuel inlet and the second fuel inlet is variable and controlled by a processor.

## Patentansprüche

1. Kraftstoffzellensystem, das Folgendes umfasst:
eine Brenneranordnung, die Folgendes umfasst:
(i) einen länglichen Hohlkörper, der sich entlang einer Mittelachse erstreckt und ein erstes Ende und ein zweites Ende aufweist,
(ii) eine Brennerwand, die sich zwischen dem ersten Ende und dem zweiten Ende befindet, und ein erstes Volumen von dem ersten Ende bis zu der Brennerwand, und ein zweites Volumen von der Brennerwand bis zu dem zweiten Ende definiert,
(iii) einen Oxidationsmitteleinlass in das erste Volumen, wobei der Oxidationsmitteleinlass zum Bereitstellen eines Oxidationsmittelflusses durch diesen hindurch dient,
(iv) mindestens einen hohlen, länglichen Brenner, der an die Brennerwand anstößt oder sich durch eine Öffnung in der Brennerwand von dem ersten Volumen zu dem zweiten Volumen erstreckt und Folgendes umfasst:
(a) eine Brennerplatte oder einen Mischer, die/der eine erste Seitenöffnung in das erste Volumen, und eine zweite Seitenöffnung in das zweite Volumen aufweist,
(b) einen ersten Kraftstoffeinlass in das erste Volumen zum Zuführen eines ersten Kraftstoffs von einem ersten Kraftstoffdurchgang zu dem ersten Volumen; und
(c) einen zweiten Kraftstoffeinlass in das zweite Volumen zum Zuführen eines zweiten Kraftstoffs von einem zweiten Kraftstoffdurchgang zu dem zweiten Volumen,
wobei das System ferner mindestens eine Verbindung umfasst, um den ersten Kraftstoffdurchgang, für eine Zufuhr einer Mischung des ersten Kraftstoffs und des zweiten Kraftstoffs zu dem zweiten Kraftstoffeinlass, selektiv mit dem zweiten Kraftstoffdurchgang zu verbinden.

2. System nach Anspruch 1, wobei das System ein Drei-Wege-Ventil für eine selektive Verbindung des ersten Kraftstoffdurchgangs mit dem zweiten Kraftstoffdurchgang umfasst.

3. System nach einem vorhergehenden Anspruch, wobei, wenn es den Mischer umfasst, der Mischer ein Axial-Drallmischer ist, der eine Vielzahl von Leitblechen umfasst, die eine erste Seitenöffnung in das erste Volumen und eine zweite Seitenöffnung in das zweite Volumen aufweisen, oder wobei, wenn es die Brennerplatte umfasst, die Brennerplatte eine Vielzahl von Durchgängen umfasst, die sich zwischen dem ersten Volumen und dem zweiten Volumen erstrecken.

4. System nach einem vorhergehenden Anspruch, ferner umfassend einen Kraftstoffzellenstapel, und wobei der erste Kraftstoff ein Kraftstoffgas umfasst, das den Kraftstoffzellenstapel nicht passiert hat.

5. System nach einem vorhergehenden Anspruch, wobei der zweite Kraftstoff ein Anodenabgas von einem Kraftstoffzellenstapel des Kraftstoffzellensystems ist, wobei das System optional ferner ein Abgasrohrsystem umfasst, das einen Auslass einer Anode des Kraftstoffzellenstapels, für die Zufuhr des zweiten Kraftstoffs an den zweiten Kraftstoffeinlass, mit dem zweiten Kraftstoffeinlass verbindet, wobei der zweite Kraftstoffdurchgang Teil des Anoden-Abgasrohrsystems ist.

6. System nach einem vorhergehenden Anschluss, ferner umfassend ein erstes Gasrohrsystem, das eine Kraftstoffgasquelle, für die Zufuhr des ersten Kraftstoffgas zu dem ersten Kraftstoffeinlass, mit dem ersten Kraftstoffeinlass verbindet, wobei der erste Kraftstoffdurchgang Teil des ersten Gasrohrsystems ist, und optional wobei der erste Kraftstoff eines oder mehrere von Gas aus dem Stromnetz, Erdgas, Startkraftstoff oder Nachfüllkraftstoff ist.

7. System nach einem vorhergehenden Anspruch, wobei die Verbindung eine Umgehungsleitung umfasst, die sich von dem ersten Kraftstoffdurchgang zu dem zweiten Kraftstoffdurchgang erstreckt, um den ersten Kraftstoff von dem ersten Kraftstoffeinlass zu dem zweiten Kraftstoffeinlass selektiv umzuleiten.

8. System nach einem vorhergehenden Anspruch, wobei mindestens einer von dem ersten Kraftstoffeinlass und dem zweiten Kraftstoffeinlass eine Düse ist, und optional wobei die mindestens eine Düse durch mindestens ein Loch in ihrem jeweiligen Kraftstoffeinlass definiert ist.

9. System nach einem vorhergehenden Anspruch, wobei mindestens einer von dem ersten Kraftstoffeinlass und dem zweiten Kraftstoffeinlass eine Öffnung in jeweils einem ersten Kraftstoffrohr oder einem zweiten Kraftstoffrohr ist, und optional wobei der erste und/oder der zweite Kraftstoffeinlass nicht an einem Ende seines jeweiligen Kraftstoffrohrs positioniert ist, sondern entlang seines jeweiligen Kraftstoffrohrs positioniert ist.

10. Verfahren zum Betreiben eines Kraftstoffzellensystems nach einem der vorhergehenden Ansprüche, wobei das Verfahren die folgenden Schritte umfasst:
(i) Leiten eines Oxidationsmittels zu dem Oxidationsmitteleinlass;
(ii) Selektives Leiten des ersten Kraftstoffs zu dem ersten Kraftstoffeinlass und selektives Leiten des zweiten Kraftstoffs zu dem zweiten Kraftstoffeinlass, und
(iii) Verbrennen des selektiv geleiteten Kraftstoffs oder der selektiv geleiteten Kraftstoffe in dem zweiten Volumen nach dem Austreten aus einem von Folgendem:
a. der Brennerplatte oder dem Mischer,
b. dem zweiten Kraftstoffeinlass, oder
c. der Brennerplatte oder dem Mischer und dem zweiten Kraftstoffeinlass.

11. Verfahren nach Anspruch 10, umfassend eine Verwendung der Verbindung, um den ersten Kraftstoffdurchgang mit dem zweiten Kraftstoffdurchgang zu verbinden, um eine Mischung der zwei Kraftstoffe dem zweiten Kraftstoffeinlass zuzuführen, wodurch die Mischung der zwei Kraftstoffe nach Austreten aus dem zweiten Kraftstoffeinlass in dem zweiten Volumen verbrannt wird.

12. Verfahren nach Anspruch 10, wobei das Kraftstoffzellensystem selektiv in einem ersten Modus, einem zweiten Modus, einem dritten Modus, und einem optionalen vierten Modus betrieben werden kann, wobei jeder Modus durch Folgendes gekennzeichnet ist:
(i) in dem ersten Modus wird der erste Kraftstoff über den ersten Kraftstoffdurchgang zu dem ersten Kraftstoffeinlass geleitet, wobei das Oxidationsmittel und der erste Kraftstoff dadurch in dem ersten Volumen zwischen dem ersten Kraftstoffeinlass und der Brennerplatte oder dem Mischer ineinander übergehen und sich vermischen, und wobei der zweite Kraftstoff dem zweiten Kraftstoffeinlass nicht zugeführt wird,
(ii) in dem zweiten Modus wird der erste Kraftstoff über den ersten Kraftstoffdurchgang zu dem ersten Kraftstoffeinlass geleitet, wobei das Oxidationsmittel und der erste Kraftstoff dadurch in dem ersten Volumen zwischen dem ersten Kraftstoffeinlass und der Brennerplatte oder dem Mischer ineinander übergehen und sich vermischen, und der zweite Kraftstoff dem zweiten Kraftstoffeinlass zugeführt wird, wobei das Oxidationsmittel und der zweite Kraftstoff dadurch in dem zweiten Volumen ineinander übergehen und sich vermischen,
(iii) in dem dritten Modus wird der erste Kraftstoff über die mindestens eine Verbindung zu dem zweiten Kraftstoffeinlass geleitet, und der zweite Kraftstoff wird auch zu dem zweiten Kraftstoffeinlass geleitet, wobei sich der erste Kraftstoff und der zweite Kraftstoff dadurch vermischen, um auf dem zweiten Kraftstoffeinlass als eine Mischung der beiden Kraftstoffe auszutreten,
wobei das Oxidationsmittel und die Mischung dann in dem zweiten Volumen zur Verbrennung ineinander übergehen und sich vermischen,
(iv) in dem optionalen vierten Modus wird der zweite Kraftstoff dem zweiten Kraftstoffeinlass zugeführt, wobei das Oxidationsmittel und der zweite Kraftstoff in dem zweiten Volumen zur Verbrennung ineinander übergehen und sich vermischen, und wobei der erste Kraftstoff entweder dem ersten Kraftstoffeinlass oder dem zweiten Kraftstoffeinlass nicht zugeführt wird.

13. Verfahren nach Anspruch 12, wobei das System ferner einen auswählbaren fünften Modus aufweist, in dem der erste Kraftstoff und der zweite Kraftstoff beide zu dem zweiten Kraftstoffeinlass geleitet werden, wobei der erste und der zweite Kraftstoff dadurch ineinander übergehen und sich vermischen, die Mischung dann in dem zweiten Volumen zur Verbrennung in das Oxidationsmittel übergeht und sich mit ihm vermischt, und wobei der erste Kraftstoff auch zu dem ersten Kraftstoffeinlass geleitet wird, um sich auch in dem ersten Volumen mit dem Oxidationsmittel zu vermischen.

14. Verfahren nach Anspruch 13, wobei das Mischverhältnis des ersten und des zweiten Kraftstoffs variabel und von einem Prozessor gesteuert ist.

15. Verfahren nach Anspruch 13 oder Anspruch 14, wobei das Verhältnis der Durchflussraten des ersten Kraftstoffs zu dem ersten Kraftstoffeinlass und zu dem zweiten Kraftstoffeinlass variabel und von einem Prozessor gesteuert ist

## Revendications

1. Système de pile à combustible comprenant :
un ensemble de brûleurs comprenant :
(i) un corps creux allongé longitudinalement s'étendant le long d'un axe central et ayant une première extrémité et une deuxième extrémité,
(ii) une paroi de brûleur située entre ladite première et ladite deuxième extrémité et définissant un premier volume entre ladite première extrémité et ladite paroi de brûleur, et un deuxième volume entre ladite paroi de brûleur et ladite deuxième extrémité,
(iii) une entrée d'oxydant dans ledit premier volume, l'entrée d'oxydant permettant de fournir un flux d'oxydant à travers celle-ci,
(iv) au moins un brûleur creux allongé qui vient en butée contre ladite paroi de brûleur ou qui s'étend à travers une ouverture dans ladite paroi de brûleur depuis ledit premier volume jusqu'audit deuxième volume et qui comprend :
(a) une plaque de brûleur ou un mélangeur ayant une première ouverture latérale dans ledit premier volume, et une deuxième ouverture latérale dans ledit deuxième volume,
(b) une première entrée de combustible dans ledit premier volume pour alimenter un premier combustible à partir d'un premier passage de combustible vers ledit premier volume ; et
(c) une deuxième entrée de carburant dans ledit deuxième volume pour alimenter un deuxième carburant à partir d'un deuxième passage de carburant vers ledit deuxième volume ;
le système comprenant en outre au moins une connexion permettant de relier sélectivement le premier passage de carburant au deuxième passage de carburant pour acheminer un mélange de premier et de deuxième carburant vers la deuxième entrée de carburant.

2. Système selon la revendication 1, dans lequel le système comprend une vanne à trois voies pour la connexion sélective du premier passage de carburant au deuxième passage de carburant.

3. Système selon l'une quelconque des revendications précédentes, dans lequel, lorsqu'il comprend le mélangeur, le mélangeur est un mélangeur à tourbillon axial comprenant une pluralité d'aubes ayant une première ouverture latérale dans ledit premier volume, et une deuxième ouverture latérale dans ledit deuxième volume, ou dans lequel, lorsqu'il comprend la plaque du brûleur, ladite plaque du brûleur comprend une pluralité de passages s'étendant entre ledit premier volume et ledit deuxième volume.

4. Système selon l'une quelconque des revendications précédentes, comprenant en outre un empilement de piles à combustible, et dans lequel le premier combustible comprend un gaz combustible qui n'a pas traversé l'empilement de piles à combustible.

5. Système selon l'une quelconque des revendications précédentes, dans lequel le deuxième combustible est un effluent gazeux d'anode provenant d'un empilement de piles à combustible du système de piles à combustible, le système comprenant en outre facultativement un système de tuyaux d'effluents gazeux reliant une sortie d'une anode de l'empilement de piles à combustible à ladite deuxième entrée de combustible pour l'acheminement du deuxième combustible vers la deuxième entrée de combustible, dans lequel le deuxième passage de combustible fait partie du système de tuyaux d'effluents gazeux d'anode.

6. Système selon l'une quelconque des revendications précédentes, comprenant en outre un premier système de conduites de gaz reliant une source de gaz combustible à ladite première entrée de combustible pour l'acheminement du premier gaz combustible à ladite première entrée de combustible, le premier passage de combustible faisant partie du premier système de conduites de gaz, et facultativement dans lequel le premier combustible est l'un quelconque ou plusieurs parmi du gaz fourni par le réseau, du gaz naturel, un combustible de démarrage ou un combustible d'appoint.

7. Système selon l'une quelconque des revendications précédentes, dans lequel la connexion comprend une conduite de dérivation qui s'étend de ladite première voie de passage de carburant à ladite deuxième voie de passage de carburant pour détourner sélectivement le premier carburant de ladite première entrée de carburant à ladite deuxième entrée de carburant.

8. Système selon l'une quelconque des revendications précédentes, dans lequel au moins l'une de la première entrée de carburant et de la deuxième entrée de carburant est une buse, et facultativement dans lequel l'au moins une buse est définie par au moins un trou dans son entrée de carburant respective.

9. Système selon l'une quelconque des revendications précédentes, dans lequel au moins une de la première entrée de carburant et de la deuxième entrée de carburant est un orifice dans, respectivement, un premier tuyau de carburant ou un deuxième tuyau de carburant, et facultativement dans lequel ladite première et/ou deuxième entrée de carburant n'est pas positionnée à une extrémité de son tuyau de carburant respectif, mais est positionnée le long de son tuyau de carburant respectif.

10. Procédé de fonctionnement d'un système de pile à combustible selon l'une quelconque des revendications précédentes, le procédé comprenant les étapes consistant à :
(i) diriger un oxydant vers ladite entrée d'oxydant ;
(ii) diriger sélectivement le premier combustible vers ladite première entrée de combustible et diriger sélectivement le deuxième combustible vers ladite deuxième entrée de combustible ; et
(iii) brûler le ou les combustibles sélectivement dirigés dans ledit deuxième volume après avoir quitté l'une parmi :
a. la plaque du brûleur ou le mélangeur ;
b. la deuxième entrée de combustible ; ou
c. la plaque du brûleur ou le mélangeur et la deuxième entrée de carburant.

11. Procédé selon la revendication 10, comprenant une utilisation de la connexion pour relier le premier passage de carburant au deuxième passage de carburant pour délivrer un mélange des deux carburants à la deuxième entrée de carburant, moyennant quoi le mélange des deux carburants est brûlé dans ledit deuxième volume après être sorti de la deuxième entrée de carburant.

12. Procédé selon la revendication 10, dans lequel le système de pile à combustible est exploitable sélectivement dans un premier mode, un deuxième mode, un troisième mode et un quatrième mode facultatif, chaque mode étant caractérisé comme suit :
(i) dans le premier mode, le premier combustible est dirigé vers ladite première entrée de combustible via le premier passage de combustible, ledit oxydant et ledit premier combustible convergeant et se mélangeant ainsi dans ledit premier volume entre ladite première entrée de combustible et ladite plaque de brûleur ou ledit mélangeur, et dans lequel le deuxième combustible n'est pas fourni à la deuxième entrée de combustible ;
(ii) dans le deuxième mode, le premier combustible est dirigé vers la première entrée de combustible par le premier passage de combustible, ledit oxydant et ledit premier combustible convergeant et se mélangeant ainsi dans ledit premier volume entre ladite première entrée de combustible et ladite plaque de brûleur ou le mélangeur, et ledit deuxième combustible est fourni à ladite deuxième entrée de combustible, ledit oxydant et ledit deuxième combustible convergeant et se mélangeant dans ledit deuxième volume ;
(iii) dans le troisième mode, le premier combustible est dirigé vers ladite deuxième entrée de combustible par l'intermédiaire de ladite au moins une connexion, et ledit deuxième combustible est également dirigé vers ladite deuxième entrée de combustible, ledit premier combustible et ledit deuxième combustible se mélangeant ainsi pour sortir de la deuxième entrée de combustible sous la forme d'un mélange des deux combustibles,
dans lequel ledit oxydant et ledit mélange convergent ensuite et se mélangent dans ledit deuxième volume pour la combustion ;
(iv) dans le quatrième mode optionnel, ledit deuxième carburant est fourni à ladite deuxième entrée de carburant, ledit oxydant et ledit deuxième carburant convergeant et se mélangeant dans ledit deuxième volume pour la combustion, et dans lequel le premier carburant n'est pas fourni soit à la première entrée de carburant, soit à la deuxième entrée de carburant.

13. Procédé selon la revendication 12, le système ayant en outre un cinquième mode sélectionnable dans lequel ledit premier carburant et ledit deuxième carburant sont tous deux dirigés vers ladite deuxième entrée de carburant, lesdits premier et deuxième carburants convergeant et se mélangeant ainsi, le mélange convergeant et se mélangeant ensuite avec ledit oxydant dans ledit deuxième volume pour la combustion, et dans lequel le premier carburant est également dirigé vers la première entrée de carburant pour se mélanger avec l'oxydant également dans le premier volume.

14. Procédé selon la revendication 13, dans lequel le ratio du mélange du premier et du deuxième carburant est variable et commandé par un processeur.

15. Procédé selon la revendication 13 ou la revendication 14, dans lequel le rapport des débits du premier carburant vers la première entrée de carburant et la deuxième entrée de carburant est variable et commandé par un processeur.
